# EUROPÄISCHE PATENTSCHRIFT

(11) **EP 3 121 992 B1**
(45) Veröffentlichungstag und Bekanntmachung des Hinweises auf die Patenterteilung: **28.08.2019**
(21) Anmeldenummer: 16177997.0
(22) Anmeldetag: 05.07.2016
(51) Int. Cl.: H04L 9/32, G06Q 20/00, G07F 7/00

(54) **SICHERE ELEKTRONISCHE UNTERZEICHNUNG VON INFORMATION**
SECURE ELECTRONIC SIGNING OF INFORMATION
SIGNATURE ELECTRONIQUE SECURISEE D'INFORMATIONS

(30) Priorität: 20.07.2015 DE 102015111715
(43) Veröffentlichungstag der Anmeldung: 25.01.2017
(73) Patentinhaber: signotec, 40885 Ratingen (DE)
(72) Erfinder: Brandes, Arne, 31637 Rodewald (DE); Hagner, Gunther, 47169 Duisburg (DE); Specht, Wolfgang, 40882 Ratingen (DE)
(74) Vertreter: Cohausz & Florack

(56) Entgegenhaltungen:
- EP-A1- 1 944 716
- WO-A2-2012/049592
- DE-A1-102011 050 156
- US-A1- 2002 157 003
- US-A1- 2005 132 196

## Beschreibung

### Gebiet der Erfindung

Die vorliegende Erfindung betrifft unter anderem ein Verfahren, eine Vorrichtung, ein System und ein Programm zur sicheren Unterzeichnung von Informationen.

### Hintergrund der Erfindung

In den vergangenen Jahren hat in zahlreichen Geschäftsfeldern ein Wandel von papierbasierten Vertragsabschlüssen hin zur elektronischen Unterzeichnung von Verträgen stattgefunden. Dadurch ist ein medienbruchfreier Geschäftsablauf möglich, bei dem die Vertragserstellung, Präsentation, Unterzeichnung und Weiterverarbeitung durchweg auf elektronischem Wege erfolgen kann.

Ein beispielhaftes Anwendungsszenario ist die Unterzeichnung von Versicherungsverträgen durch Kunden. Dem Kunden wird dazu - beispielsweise von einem Außendienstmitarbeiter oder Agenten der Versicherung - der zu unterzeichnende Vertrag auf einem Computer präsentiert und der Vertrag ggf. so lange modifiziert, bis beide Vertragsparteien sich über den Vertragsinhalt einig sind. Der Kunde kann diesen Vertrag dann auf einem an den Computer angeschlossenen Unterzeichnungsgerät in elektronischer Form unterzeichnen, beispielsweise durch Abgabe einer handschriftlichen Unterschrift auf einer berührungsempfindlichen Oberfläche eines Signaturpads. Ein Abbild der Unterschrift und optional biometrische Daten der Unterschrift, wie beispielsweise Geschwindigkeit und Druck, werden dann an den Computer zurückgeliefert und als Nachweis für die erfolgte Unterzeichnung mit dem Dokument verbunden.

In der DE 10 2011 050156 A1 wird von einer ersten Vorrichtung in einem Verfahrensschritt eine Signatur einer Kombinationsinformation erstellt. In einem weiteren Verfahrensschritt werden die Signatur der Kombinationsinformation, ein erster öffentlicher Schlüssel, verschlüsselte Unterzeichnungsdaten und eine Seriennummer S ausgegeben und von einer zweiten Vorrichtung empfangen. Die zweite Vorrichtung bildet einen Hashwert über die zu unterzeichnende Information und verbundene Elemente und gibt diesen aus.

### Allgemeine Beschreibung einiger beispielhafter Ausführungsformen der Erfindung

Es ist von erheblicher Bedeutung, dass eine Veränderung des Inhalts von zu unterzeichnenden Informationen (beispielsweise eine Dokuments) nach erfolgter elektronischer Unterzeichnung am Unterzeichnungsgerät sowohl für Personen, die am Prozess der elektronischen Unterzeichnung beteiligt sind (wie beispielsweise die Benutzer des Computers, auf dem die Unterzeichnungsdaten beispielsweise mit den zu unterzeichnenden Informationen verbunden werden, also beispielsweise Außendienstarbeiter oder Agenten, die Verträge mit Kunden abschließen) als auch für Personen, die sich illegal (beispielsweise über Viren oder Trojaner) Zugang zu diesem Prozess verschaffen, ausgeschlossen ist.

Es ist gleichermaßen bedeutsam, dass die bei der Unterzeichnung erfassten biometrischen Daten dergestalt geschützt werden, dass sie, beispielsweise an dem Computer, an den diese Daten beispielsweise zur Verbindung mit den zu unterzeichnenden Informationen übertragen werden, und/oder bei der Übertragung an diesen Computer von Unbefugten nicht gelesen und/oder für andere Transaktionen missbraucht werden können.

Die vorliegende Erfindung hat sich daher unter anderem die Aufgabe gestellt, Verfahren, Vorrichtungen, Systeme und Computerprogramme zur elektronischen Unterzeichnung von Informationen bereitzustellen, die die oben genannten Ziele verwirklichen.

Ein beispielhaftes erfindungsgemäßes erstes Verfahren wird von und/oder an einer ersten Vorrichtung, insbesondere einem Unterzeichnungsgerät wie beispielsweise einem Signaturpad, ausgeführt und umfasst die Schritte:
- Erfassen von für eine Person charakteristischen Unterzeichnungsdaten, wenn eine Person an der ersten Vorrichtung erste Informationen unterzeichnet;
- Ausgeben von zweiten Informationen, die zumindest eine Repräsentation der Unterzeichnungsdaten umfassen, an eine zweite Vorrichtung;
- Empfangen einer Repräsentation zumindest eines Teils der zweiten Informationen von der zweiten Vorrichtung;
- Feststellen, ob zumindest ein Teil der Repräsentation zumindest eines Teils der zweiten Informationen zu zumindest einem Teil der zweiten Informationen korrespondiert,
wobei falls festgestellt wurde, dass zumindest ein Teil der Repräsentation zumindest eines Teils der zweiten Informationen zu zumindest einem Teil der zweiten Informationen korrespondiert, zumindest folgende Schritte ausgeführt werden:
- Berechnen eines Hashwerts über eine Kombination aus zumindest einer Repräsentation der ersten Informationen und der Repräsentation zumindest eines Teils der zweiten Informationen;
- Berechnen einer Signatur des Hashwerts über die Kombination aus zumindest der Repräsentation der ersten Informationen und der Repräsentation zumindest eines Teils der zweiten Informationen, insbesondere mit einem privaten Schlüssel der ersten Vorrichtung; und
- Ausgeben der Signatur des Hashwerts an die zweite Vorrichtung.

Ein beispielhaftes erfindungsgemäßes zweites Verfahren wird von und/oder an einer zweiten Vorrichtung, insbesondere einem Computer oder Server, ausgeführt und umfasst die Schritte:
- Erzeugen, Bereitstellen, Verarbeiten und/oder Anzeigen von ersten Informationen und/oder von einer Repräsentation der ersten Informationen, wobei die ersten Informationen durch eine Person an einer ersten Vorrichtung, insbesondere einem Unterzeichnungsgerät wie beispielsweise einem Signaturpad, die mit der zweiten Vorrichtung drahtgebunden oder drahtlos verbunden ist, unterzeichnet werden sollen;
- Empfangen von zweiten Informationen, die zumindest eine Repräsentation von an der ersten Vorrichtung bei der Unterzeichnung der ersten Informationen durch die Person erfassten und für die Person charakteristischen Unterzeichnungsdaten umfassen, von der ersten Vorrichtung;
- Erzeugen einer Repräsentation zumindest eines Teils der zweiten Informationen im Portable Document Format, im ASCII-Text-Format oder im Format einer Auszeichnungssprache,
   wobei die Repräsentation zumindest eines Teils der zweiten Informationen es der ersten Vorrichtung ermöglicht, festzustellen, ob zumindest ein Teil der Repräsentation zumindest eines Teils der zweiten Informationen zu zumindest einem Teil der zweiten Informationen korrespondiert;
- Ausgeben der Repräsentation zumindest eines Teils der zweiten Informationen an die erste Vorrichtung;
- Empfangen einer insbesondere mit einem privaten Schlüssel der ersten Vorrichtung berechneten Signatur eines Hashwerts über eine Kombination aus zumindest einer Repräsentation der ersten Informationen und der Repräsentation zumindest eines Teils der zweiten Informationen von der ersten Vorrichtung;
- Erzeugen einer Repräsentation einer Kombination aus zumindest den ersten Informationen, zumindest dem Teil der zweiten Informationen und der Signatur des Hashwerts; und
- Speichern und/oder Ausgeben der Repräsentation der Kombination aus zumindest den ersten Informationen, zumindest dem Teil der zweiten Informationen und der Signatur des Hashwerts.

Eine beispielhafte erfindungsgemäße erste Vorrichtung ist eingerichtet zur Ausführung und/oder Steuerung oder umfasst Mittel zur Ausführung und/oder Steuerung des ersten Verfahrens. Alternativ umfasst eine beispielhafte erfindungsgemäße erste Vorrichtung zumindest einen Prozessor und zumindest einen Speicher, wobei in dem Speicher ein Programm umfassend Programmanweisungen gespeichert ist, wobei der Speicher und das Programm eingerichtet sind, um, mit dem Prozessor, eine Vorrichtung zumindest zu veranlassen, das erste Verfahren auszuführen, wenn das Programm auf dem Prozessor ausgeführt wird.

Eine beispielhafte erfindungsgemäße zweite Vorrichtung ist eingerichtet zur Ausführung und/oder Steuerung oder umfasst Mittel zur Ausführung und/oder Steuerung des zweiten Verfahrens. Alternativ umfasst eine beispielhafte erfindungsgemäße zweite Vorrichtung zumindest einen Prozessor und zumindest einen Speicher, wobei in dem Speicher ein Programm umfassend Programmanweisungen gespeichert ist, wobei der Speicher und das Programm eingerichtet sind, um, mit dem Prozessor, eine Vorrichtung zumindest zu veranlassen, das zweite Verfahren auszuführen, wenn das Programm auf dem Prozessor ausgeführt wird.

Ein beispielhaftes erfindungsgemäßes System umfasst die erste Vorrichtung und die zweite Vorrichtung.

Ein beispielhaftes erfindungsgemäßes erstes Programm umfasst Programmanweisungen, die einen Prozessor veranlassen, das erste Verfahren auszuführen und/oder zu steuern, wenn das Programm auf dem Prozessor ausgeführt wird. Das Programm kann beispielsweise auf einem computerlesbaren Speichermedium gespeichert sein, das beispielsweise gegenständlich ausgebildet ist.

Ein beispielhaftes erfindungsgemäßes zweites Programm umfasst Programmanweisungen, die einen Prozessor veranlassen, das zweite Verfahren auszuführen und/oder zu steuern, wenn das Programm auf dem Prozessor ausgeführt wird. Das Programm kann beispielsweise auf einem computerlesbaren Speichermedium gespeichert sein, das beispielsweise gegenständlich ausgebildet ist.

Folgende Aspekte werden vorliegend offenbart, wobei der fünfte Aspekt Gegenstand der Erfindung ist und der erste, zweite und dritte Aspekt optionale Ergänzungen darstellen:

### Erster Aspekt:

Erzeugen eines Sitzungsschlüssels an der zweiten Vorrichtung, der verschlüsselt an die erste Vorrichtung übertragen und dann zur Verschlüsselung zumindest eines Teils der Kommunikation zwischen der ersten Vorrichtung und der zweiten Vorrichtung verwendet wird. Hier wird insbesondere durch die verschlüsselte Übertragung des Sitzungsschlüssels an die erste Vorrichtung die Sicherheit gegen Ausspähung der Kommunikation zwischen der ersten Vorrichtung und der zweiten Vorrichtung erhöht.

### Zweiter Aspekt:

Erzeugen eines Sitzungsschlüssels an der ersten Vorrichtung, der insbesondere zur Verschlüsselung der an der ersten Vorrichtung erfassten Unterzeichnungsdaten verwendet wird, beispielsweise im Rahmen einer hybriden Verschlüsselung, also einer Kombination aus symmetrischer und asymmetrischer Verschlüsselung. Durch die Erzeugung des Sitzungsschlüssels an der ersten Vorrichtung (anstelle der Erzeugung an der zweiten Vorrichtung) wird die Ausspähung des Sitzungsschlüssels und die Entschlüsselung der verschlüsselten Unterzeichnungsdaten erheblich erschwert.

### Dritter Aspekt:

Reduzieren des Informationsgehalts der erfassten Unterzeichnungsdaten und Ausgeben lediglich der dergestalt reduzierten Unterzeichnungsdaten an die zweite Vorrichtung zum Zwecke der Darstellung einer Repräsentation der Unterzeichnungsdaten (beispielsweise zur Visualisierung der Vornahme der Unterzeichnung während der Unterzeichnung). Da die dergestalt ausgegebenen Unterzeichnungsdaten einen reduzierten Informationsgehalt aufweisen (beispielsweise keine Druckinformation und/oder keine zeitliche Information), können sie nicht zur Rekonstruktion der erfassten (ausführlicheren) Unterzeichnungsdaten, deren Repräsentation beispielsweise mit einer Repräsentation der ersten Informationen als Unterzeichnungsnachweis verbunden wird, verwendet werden.

### Vierter Aspekt:

Berechnen und Signieren, in der ersten Vorrichtung, eines Hashwerts über eine in der ersten Vorrichtung erzeugte Repräsentation (z.B. einer Portable Document Format (PDF) Repräsentation) einer Kombination aus zumindest den ersten Informationen und zumindest einem Teil von zweiten Informationen, die zumindest eine Repräsentation der Unterzeichnungsdaten umfassen, und Ausgeben einer Repräsentation (z.B. einer PDF-Repräsentation) einer Kombination aus zumindest den ersten Informationen, zumindest dem Teil der zweiten Informationen und der Signatur des Hashwerts an die zweite Vorrichtung. Insbesondere finden hier also die Berechnung des Hashwerts über eine Repräsentation, die auf den ersten Informationen und zumindest einem Teil der zweiten Informationen (umfassend eine Repräsentation der Unterzeichnungsdaten) beruht, und die Erzeugung einer Repräsentation, die die ersten Informationen, zumindest einen Teil der zweiten Informationen und die Signatur des Hashwerts umfasst, in der ersten Vorrichtung statt, so dass sicherheitskritische Übertragungen von Teilen dieser Informationen zwischen der ersten Vorrichtung und der zweiten Vorrichtung vermieden oder zumindest reduziert werden können. Die erste Vorrichtung erhält also beispielsweise eine Repräsentation (z.B. eine PDF-Repräsentation) der ersten Informationen, die zu unterzeichnen sind, und gibt nach Erfassung der Unterzeichnungsdaten eine Repräsentation (z.B. eine PDF-Repräsentation) aus, die die ersten Informationen, zumindest einen Teil der zweiten Informationen (umfassend eine beispielsweise verschlüsselte Repräsentation der Unterzeichnungsdaten) und eine Signatur eines Hashwerts über die ersten Informationen und zumindest den Teil der zweiten Informationen umfasst.

### Fünfter Aspekt:

Ausgeben von zweiten Informationen, die zumindest eine Repräsentation der Unterzeichnungsdaten umfassen, von der ersten Vorrichtung an die zweite Vorrichtung, Empfangen einer Repräsentation (z.B. in Form eines inkrementellen PDF-Updates) zumindest eines Teils der zweiten Informationen von der zweiten Vorrichtung, Feststellen, ob zumindest ein Teil der Repräsentation zumindest eines Teils der zweiten Informationen zu zumindest einem Teil der zweiten Informationen korrespondiert, wobei falls festgestellt wurde, dass zumindest ein Teil der Repräsentation zumindest eines Teils der zweiten Informationen zu zumindest einem Teil der zweiten Informationen korrespondiert, ein Hashwert über eine Kombination aus zumindest einer Repräsentation (z.B. einer PDF-Repräsentation) der ersten Informationen und der Repräsentation (z.B. des inkrementellen PDF-Updates) zumindest eines Teils der zweiten Informationen berechnet wird. Der Hashwert kann insbesondere in der ersten Vorrichtung signiert und die so erhaltene Signatur an die zweite Vorrichtung ausgegeben werden, um dort beispielsweise in eine Repräsentation (z.B. eine PDF-Repräsentation) der ersten Informationen, zumindest eines Teils der zweiten Informationen und der Signatur des Hashwerts eingebettet zu werden. Auch hier findet also die Berechnung des Hashwerts vorteilhaft in der ersten Vorrichtung statt, allerdings muss die erste Vorrichtung im Gegensatz zum zuvor beschriebenen vierten Aspekt nicht in der Lage sein, eine Repräsentation (z.B. eine PDF-Repräsentation) einer Kombination der ersten Informationen und zumindest eines Teils der zweiten Informationen zur erzeugen (benötigt also beispielsweise keine PDF-Bibliothek).

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnungen

In den Figuren zeigen:
- Fig. 1:: eine schematische Darstellung eines Systems gebildet durch eine erste Vorrichtung und eine zweite Vorrichtung gemäß einem Ausführungsbeispiel der Erfindung,
- Fig. 2:: ein Blockschaltbild einer ersten Vorrichtung gemäß einem Ausführungsbeispiel der Erfindung;
- Fig. 3:: ein Blockschaltbild einer zweiten Vorrichtung gemäß einem Ausführungsbeispiel der Erfindung;
- Fig. 4:: Flussdiagramme der von der ersten Vorrichtung und der zweiten Vorrichtung ausgeführten Verfahrensschritte gemäß einem Beispiel;
- Fig. 5a/5b:: Flussdiagramme der von der ersten Vorrichtung und der zweiten Vorrichtung ausgeführten Verfahrensschritte gemäß einem Beispiel, in dem der erste Aspekt enthalten ist;
- Fig. 6a/6b:: Flussdiagramme der von der ersten Vorrichtung und der zweiten Vorrichtung ausgeführten Verfahrensschritte gemäß einem Beispiel, in dem der zweite Aspekt enthalten ist;
- Fig. 7a/7b:: Flussdiagramme der von der ersten Vorrichtung und der zweiten Vorrichtung ausgeführten Verfahrensschritte gemäß einem Beispiel, in dem der dritte Aspekt enthalten ist;
- Fig. 8:: Flussdiagramme der von der ersten Vorrichtung und der zweiten Vorrichtung ausgeführten Verfahrensschritte gemäß einem Beispiel, in dem der vierte Aspekt enthalten ist;
- Fig. 9a/9b:: Flussdiagramme der von der ersten Vorrichtung und der zweiten Vorrichtung ausgeführten Verfahrensschritte gemäß einem Ausführungsbeispiel der Erfindung, in dem der fünfte Aspekt enthalten ist; und
- Fig. 10a/10b:: Flussdiagramme der von der ersten Vorrichtung und der zweiten Vorrichtung ausgeführten Verfahrensschritte gemäß einem weiteren Ausführungsbeispiel der Erfindung, in dem der fünfte Aspekt enthalten ist.

### Detaillierte Beschreibung einiger beispielhafter Ausführungsformen der Erfindung

Die vorliegende Erfindung betrifft einerseits die Verarbeitung (ein erstes Verfahren) an einer ersten Vorrichtung, insbesondere einem Unterzeichnungsgerät wie beispielsweise einem Signaturpad, und andererseits komplementär die Verarbeitung (ein zweites Verfahren) an einer zweiten Vorrichtung, insbesondere einem Computer oder Server, sowie diese Vorrichtungen selbst, ein diese Vorrichtungen umfassendes System und Programme zur Durchführung dieser Verarbeitungen.

Ein beispielhaftes erfindungsgemäßes erstes Verfahren umfasst zunächst das Erfassen von für eine Person charakteristischen Unterzeichnungsdaten, wenn eine Person an der ersten Vorrichtung erste Informationen unterzeichnet. Ein beispielhaftes erfindungsgemäßes zweites Verfahren umfasst zunächst das Erzeugen, Bereitstellen, Verarbeiten und/oder Anzeigen von ersten Informationen und/oder von einer Repräsentation der ersten Informationen, wobei die ersten Informationen durch eine Person an der ersten Vorrichtung, die mit der zweiten Vorrichtung drahtgebunden oder drahtlos verbunden ist, unterzeichnet werden sollen.

Bei der ersten Vorrichtung kann es sich beispielsweise um ein Unterzeichnungsgerät oder einen Teil davon handeln. Das Unterzeichnungsgerät kann beispielsweise eine Benutzerschnittstelle aufweisen, mittels derer die Person eine oder mehrere Aktionen zur Unterzeichnung der Information vornehmen kann. Beispielsweise kann die Person über die Benutzerschnittstelle ihren Willen zur Unterzeichnung der ersten Informationen kundtun (beispielsweise durch Betätigung einer Bestätigungstaste). Das Unterzeichnungsgerät ist eingerichtet zur Erfassung von für die Person charakteristischen Unterzeichnungsdaten, also beispielsweise Daten, die eine Authentifizierung der Person ermöglichen. Die Bereitstellung dieser Unterzeichnungsdaten durch die Person kann beispielsweise zumindest einen Teil der Unterzeichnung der ersten Informationen darstellen. Das Unterzeichnungsgerät kann beispielsweise ein Signaturpad sein, das eine graphische Benutzerschnittstelle aufweist, auf der eine Person zumindest eine handschriftliche Unterschrift zur Unterzeichnung der Information leisten kann. Alternativ kann das Unterzeichnungsgerät auch ein Mobiltelefon (z.B. ein Smartphone), ein Tablet-Computer oder Laptop-Computer mit einer jeweiligen Einrichtung zur Erfassung von Unterzeichnungsdaten, beispielsweise einem berührungsempfindlichen Bildschirm, sein, um nur ein paar Beispiele zu nennen.

Bei der zweiten Vorrichtung kann es sich beispielsweise um einen Computer oder einen Teil davon handeln, auf dem die zu unterzeichnende Information beispielsweise gespeichert, angezeigt/wiedergegeben und/oder geändert werden kann. Der Computer kann ortsfest (z.B. ein Desktop Computer) oder mobil (z.B. ein Laptop, Netbook, Mobiltelefon oder Tablet-PC) sein. Der Computer kann auch Bestandteil eines Verkaufsterminals, einer Kasse oder eines Selbstbedienungsautomaten (z.B. eines Bankautomaten) sein. Die zweite Vorrichtung kann auch als Server ausgebildet werden, und dann mit der ersten Vorrichtung beispielsweise zumindest teilweise über ein Netzwerk verbunden sein, beispielsweise über das Internet.

Die erste und zweite Vorrichtung können zum Datenaustausch zumindest zeitweilig mittels einer drahtgebundenen oder drahtlosen Verbindung verbunden sein. Beispielsweise kann die erste Vorrichtung mittels einer Universal Serial Bus (USB) Schnittstelle oder über Bluetooth® mit der zweiten Vorrichtung verbunden sein, um nur ein paar Beispiele zu nennen.

Der Datenaustausch kann verschlüsselt oder unverschlüsselt erfolgen. Die Verschlüsselung kann dabei symmetrisch (mit gleichen Schlüsseln auf der Sende- und Empfangsseite) oder asymmetrisch (mit unterschiedlichen Schlüsseln auf der Sende- und Empfangsseite) ausgebildet sein.

In der vorliegenden Spezifikation bezeichnet der Begriff einer "Repräsentation" von Daten/Informationen unter anderem eine unverschlüsselte oder verschlüsselte Version der Daten/Informationen. Wenn keine Verschlüsselung stattfindet, entspricht die "Repräsentation" der Daten/Informationen dann beispielsweise den Daten/Informationen selbst, während bei stattfindender Verschlüsselung die "Repräsentation" der Daten/Informationen beispielsweise eine verschlüsselte Version der Daten/Informationen ist. Die "Repräsentation" von Daten/ Informationen kann beispielsweise auch eine komprimierte oder unkomprimierte Version der Daten/Informationen bezeichnen, oder beispielsweise eine verschlüsselte und komprimierte Version der Daten/Informationen oder eine unverschlüsselte und unkomprimierte Version der Daten/Informationen. Der Begriff einer "Repräsentation" von Informationen kann auch ein bestimmtes Format (z.B. ein Dateiformat) bezeichnen, in dem die Informationen vorliegen und/oder präsentiert werden. Nichtabschließende Beispiele für derartige Formate sind das Portable Document Format (PDF) (z.B. mit der Dateiendung "pdf"), das ASCII-Text-Format (z.B. mit der Dateiendung "txt") oder ein Format einer Auszeichnungssprache wie beispielsweise Extensible Markup Lanuage (XML) oder Hypertext Markup Language (HTML).

Die zu unterzeichnenden ersten Informationen können beispielsweise der Inhalt eines Dokuments (beispielsweise eines PDF-Dokuments, Microsoft-WORD-Dokuments oder Text-Dokuments) oder einer Internetseite (z.b. im HTML-Format) sein. Alternativ kann es sich bei den ersten Informationen auch um Inhalte eines Audio- oder Videodokuments handeln, die beispielsweise einen Vertragsinhalt darstellen. Die zu unterzeichnenden ersten Informationen können beispielsweise Transaktionsinformationen sein. Dabei kann es sich beispielsweise um Informationen zu einer Transaktion handeln, beispielsweise zu einer Transaktion im Rahmen des allgemeinen oder elektronischen Geschäftsverkehrs. Nicht abschließende Beispiele für Transaktionen sind Überweisungen, Vertragsabschlüsse (z.B. von Kaufverträgen) oder Abgaben von Willenserklärungen, beispielsweise im Internet oder in Verkaufsgeschäften oder Filialen von Dienstleistungsunternehmen wie beispielsweise Banken oder Versicherungen. Durch die Unterzeichnung der Transaktionsinformationen bestätigt die unterzeichnende Person beispielsweise Ihren Willen, die Transaktion durchführen zu wollen. Die Transaktionsinformationen können beispielsweise die Transaktion gänzlich oder zumindest teilweise charakterisieren, beispielsweise durch Angabe des Betrags (ggf. mit Angabe der Währung) und der Informationen (Name und/oder Kontonummer) über den Empfänger im Falle einer Überweisung, oder durch Angabe des Kaufgegenstands und des Preises (und ggf. der Währung) im Falle eines Kaufs. Die Transaktionsinformationen können der unterzeichnenden Person beispielsweise vor der Unterzeichnung angezeigt werden, beispielsweise auf einer Anzeigeeinheit der zweiten Vorrichtung und/oder auf einer Anzeigevorrichtung der ersten Vorrichtung. Die Transaktionsinformationen können beispielsweise Text und/oder Bilder enthalten.

Die Unterzeichnungsdaten können beispielsweise beim Vollzug der handschriftlichen Unterschrift der Person erfasste biometrische Daten der Person umfassen, beispielsweise die x/y-Koordinaten einer Vielzahl von Punkten der Unterschrift (optional auch mit zugehöriger Zeitinformation (z.B. Zeitstempeln für einige oder alle der x/y-Koordinaten) und/oder Druckinformation (auch als z-Komponente darstellbar)). Die Unterzeichnungsdaten können insbesondere die charakteristischen Eigenschaften der handschriftlichen Unterschrift repräsentieren, beispielsweise das Aussehen der Unterschrift (z.B. anhand zumindest der x/y-Koordinaten), die Dynamik bei deren Erstellung (langsam geschriebene vs. schneller geschrieben Bereiche, z.B. anhand der Zeitstempel)), den ausgeübten Druck bei Schreiben (z.B. anhand der Druckinformation) und/oder die Reihenfolge, in der bestimmte Teil der Unterschrift erzeugt werden (z.B. anhand von Zeitstempeln), beispielsweise ob ein i-Punkt unmittelbar beim Schreiben des Buchstaben "i" gesetzt wird oder erst nach Vollendung der restlichen Buchstaben der Unterschrift. Zusätzlich oder alternativ können die Unterzeichnungsdaten auch andere biometrische Daten der Person umfassen, z.B. Daten zu einem von der Person erfassten Fingerabdruck und/oder Irisabdruck, oder zu einem erfassten Photo von der Person, etc., die mit entsprechenden Erfassungseinheiten erfasst werden, die Bestandteil der ersten Vorrichtung oder operativ mit dieser verbunden sind.

Die Unterzeichnungsdaten können zusätzlich oder alternativ auch eine elektronische Signatur der Person umfassen, also beispielsweise eine Signatur, die unter Verwendung einer Smartcard der Person erstellt wird. Dazu weist die erste Vorrichtung 1 beispielsweise ein Smartcard-Lesegerät auf oder stellt ein solches dar. Bei der elektronischen Signatur der Person kann es sich beispielsweise um eine in der Richtlinie 1999/93/EG des Europäischen Parlaments und des Rates vom 13. Dezember 1999 über gemeinschaftliche Rahmenbedingungen für elektronische Signaturen definierte elektronische Signatur oder fortgeschrittene elektronische Signatur handeln, beispielsweise auch in Form einer biometrischen elektronischen Signatur, der biometrische Daten der unterzeichnenden Person hinzugefügt sind.

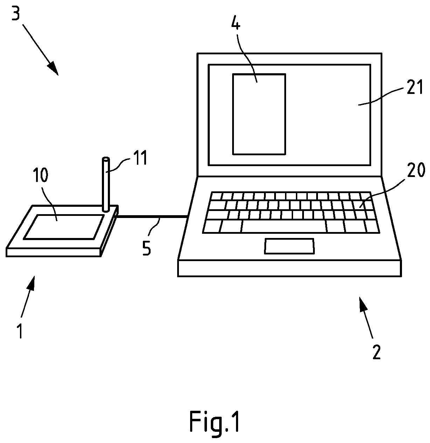

Fig. 1 ist eine schematische Darstellung eines Systems 3 gemäß einem Ausführungsbeispiel der Erfindung, gebildet durch ein Unterzeichnungsgerät 1 als beispielhafter erster Vorrichtung und einem Computer 2 als beispielhafter zweiter Vorrichtung. Zu unterzeichnende erste Informationen, hier beispielsweise enthalten in einem Dokument 4, insbesondere einem Vertrag in Form eines PDF-Dokuments, wird beispielsweise auf dem Bildschirm 21 des Computers 2 angezeigt und kann über die Tastatur 20 geändert werden, beispielsweise bis Einigkeit der Vertragsparteien über den Inhalt des Dokuments 4 besteht. Die elektronische Unterzeichnung findet dann auf dem Unterzeichnungsgerät 1 statt, das mit dem Computer 2 über eine Verbindung 5, hier beispielsweise als drahtgebundene Verbindung ausgeführt, verbunden ist. Zusätzlich oder alternativ wird die zu unterzeichnende Information zumindest teilweise auf dem Unterzeichnungsgerät 1 erzeugt.

Das Unterzeichnungsgerät 1 ist in Fig. 1 beispielhaft als Signaturpad, also als ein Gerät zur Erfassung einer mit einem Stift 11 auf der Oberfläche 10 des Signaturpads 1 ausgeführten handschriftlichen Unterschrift, verkörpert, es können allerdings auch zusätzlich oder anstelle der handschriftlichen Unterschrift weitere biometrische Daten einer Person erfasst werden. Die bei der Unterzeichnung der zu unterzeichnenden Information, beispielsweise eines Dokuments 4, am Signaturpad 1 erfassten Daten stellen die Unterzeichnungsdaten dar und umfassen insbesondere der Unterzeichnung zugeordnete biometrische Daten, wie oben bereits ausgeführt wurde.

Die Unterzeichnungsdaten werden an den Computer 2 übertragen, beispielsweise um mit den zu unterzeichnenden ersten Informationen (hier den Inhalten des Dokuments 4) verknüpft oder gespeichert zu werden, wie nachfolgend noch genauer beschrieben wird.

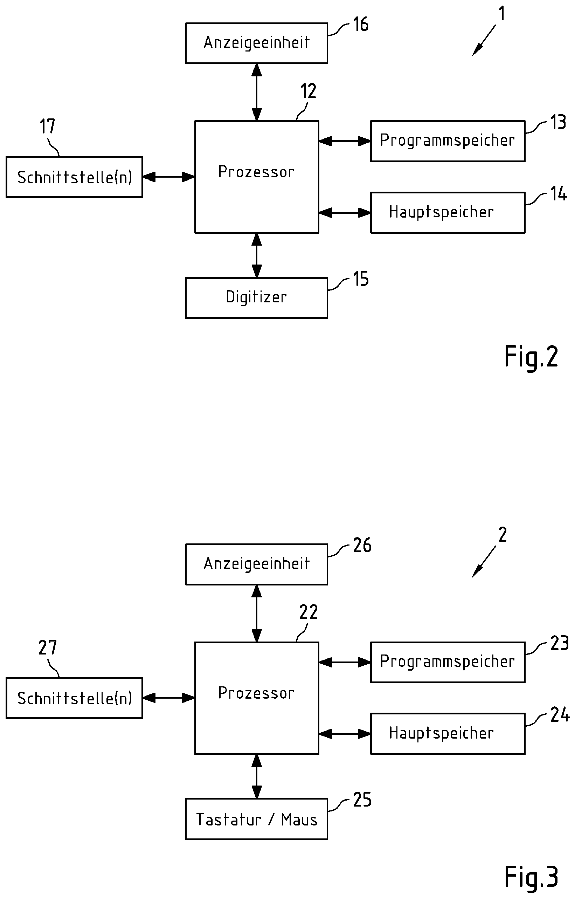

Fig. 2 ist ein Blockschaltbild der ersten Vorrichtung 1 (vgl. Fig. 1) gemäß einem Ausführungsbeispiel der Erfindung. Die erste Vorrichtung 1 umfasst einen Prozessor 12, der Programmcode eines Programms ausführt, das in einem Programmspeicher 13 gespeichert ist. Es handelt sich dabei insbesondere um Programmcode, der den Prozessor 12 veranlasst, das erste Verfahren auszuführen und/oder zu steuern, wenn das Programm auf dem Prozessor 12 ausgeführt wird. Der Prozessor verfügt des Weiteren über einen Hauptspeicher 14, beispielsweise zur Speicherung von Arbeitsergebnissen. Prozessor 12 steuert eine Anzeigeeinheit 16, über die der unterzeichnenden Person beispielsweise Inhalte angezeigt werden können (beispielsweise die zu unterzeichnenden ersten Informationen, oder zumindest Teile davon, oder Aufforderungen, die den Unterzeichnungsprozess moderieren). Die Anzeigeeinheit 16 ist allerdings grundsätzlich entbehrlich. Prozessor 12 steuert außerdem eine oder mehrere Schnittstellen 17, beispielsweise die Schnittstelle der Verbindung 5 zur zweiten Vorrichtung 2. Zu diesen Schnittstellen kann beispielsweise auch eine Schnittstelle zählen, über die ein erster privater Schlüssel in die erste Vorrichtung 1 geladen werden kann, beispielsweise von einer Chipkarte, über eine drahtlose Verbindung oder über eine kabelgebundene Verbindung (beispielsweise auch der Verbindung 5 zur zweiten Vorrichtung 2). Prozessor 12 kann optional auch zur Erzeugung der zu unterzeichnenden ersten Informationen und/oder zur Steuerung dieser Erzeugung eingerichtet sein. Wenn es sich bei der ersten Vorrichtung 1 um eine Vorrichtung zur Erfassung einer handschriftlichen Unterschrift handelt, steuert Prozessor 12 weiterhin eine Digitizer-Einheit 15, die mit einem Stift 11 auf der Oberfläche der ersten Vorrichtung 1 ausgeführte Eingaben in Form einer Folge von x/y-Koordinaten (und optional Zeit- und/oder Druckinformation) erfasst.

Fig. 3 ist ein Blockschaltbild einer zweiten Vorrichtung 2 gemäß einem Ausführungsbeispiel der Erfindung. Die zweite Vorrichtung 2 umfasst einen Prozessor 22, der die folgenden Komponenten steuert: einen Programmspeicher 23, einen Hauptspeicher 24 und eine oder mehrere Schnittstellen 27, umfassend mindestens ein Schnittstelle für die Verbindung 5 zur ersten Vorrichtung 1 (vgl. Fig. 1). Der Prozessor 22 führt Programmcode eines Programms aus, das im Programmspeicher 23 gespeichert ist. Es handelt sich dabei insbesondere um Programmcode, der den Prozessor 22 veranlasst, das zweite Verfahren auszuführen und/oder zu steuern, wenn das Programm auf dem Prozessor 22 ausgeführt wird.

Wenn die zweite Vorrichtung 2 als Computer ausgebildet ist (beispielsweise auch als Tablet- oder Laptop-Computer oder als Verkaufsterminal, Kasse oder Bankautomat, um nur ein paar Beispiele zu nennen), ist der Prozessor 22 ferner eingerichtet, die zweite Vorrichtung 2 so zu steuern, dass die zu unterzeichnenden ersten Informationen (hier Inhalte des Dokuments 4) auf der Anzeigeeinheit 26 angezeigt werden und über eine Benutzerschnittstelle (z.B. Tastatur/Maus 25) geändert werden können. Der Prozessor 22 kann ferner eingerichtet sein, die Übertragung der zu unterzeichnenden ersten Informationen oder einer Repräsentation davon an die erste Vorrichtung 1 zu steuern. Der Prozessor 22 kann ferner eingerichtet sein, die Unterzeichnung der ersten Informationen betreffende Informationen von der ersten Vorrichtung 1 zu empfangen, zu speichern und/oder weiterzuverarbeiten.

Die Programmspeicher 13 und 23 der Fig. 1 und 2 stellen jeweils ein Speichermedium zum Speichern eines oder mehrere Programme dar, das beispielsweise als magnetisches, elektrisches, optisches und/oder andersartiges Speichermedium ausgebildet sein kann. Das Speichermedien kann beispielsweise Teil eines Prozessors (z.B. des Prozessor 12 bzw. 22 der Fig. 1 und 2) sein, beispielsweise als nicht-flüchtiger oder flüchtiger Speicher des Prozessors. Ausführungsbeispiele eines Speichermediums sind eine Diskette, eine CD-ROM oder DVD, ein Memory Stick (z.B. ein USB-Stick), eine Speicherkarte oder ein Flash-Speicher.

Die Hauptspeicher 14 und 24 können beispielsweise als Random Access Memory (RAM) Speicher ausgebildet sein.

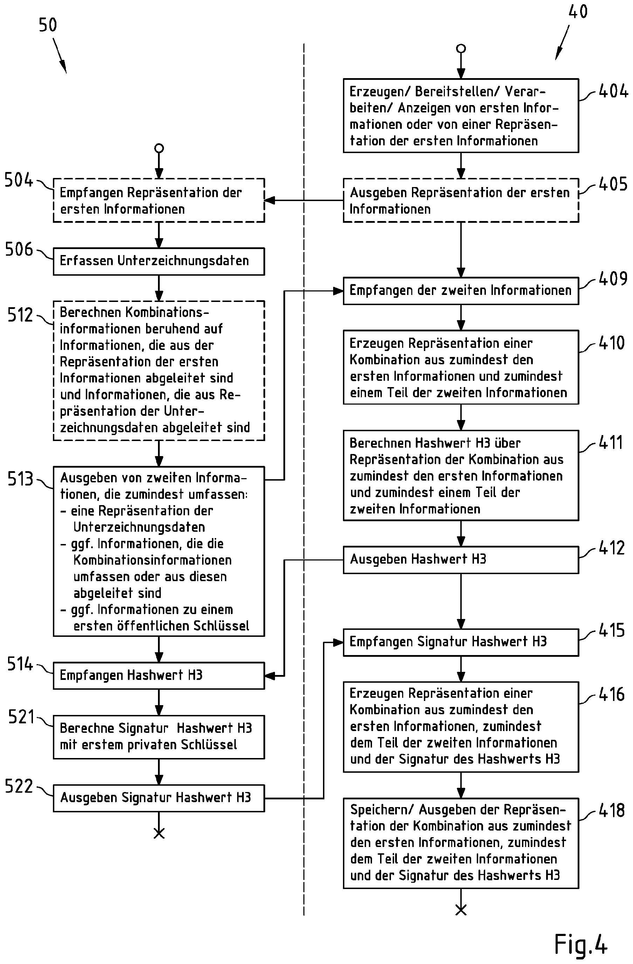

Nachfolgend wird die Verarbeitung an der ersten Vorrichtung 1 und der zweiten Vorrichtung 2 anhand der Flussdiagramme der Fig. 4-10b erläutert, in denen jeweils die linke Seite die Schritte des ersten Verfahrens, das von der ersten Vorrichtung ausgeführt wird, und die rechte, durch einen vertikal verlaufenden gestrichelten Trennstrich davon abgetrennte Seite die Schritte des zweiten Verfahrens, dass von der zweiten Vorrichtung ausgeführt wird, zeigt. Über den Trennstrich verlaufende Pfeile versinnbildlichen den Datenaustausch zwischen der ersten Vorrichtung 1 und der zweiten Vorrichtung 2 (beispielsweise über die Verbindung 5 der Fig. 1). Gestrichelte Kästen stellen dabei jeweils optionale Verfahrensschritte dar. Gleiche Verfahrensschritte sind in den Figuren auch mit den gleichen Bezugszeichen versehen.

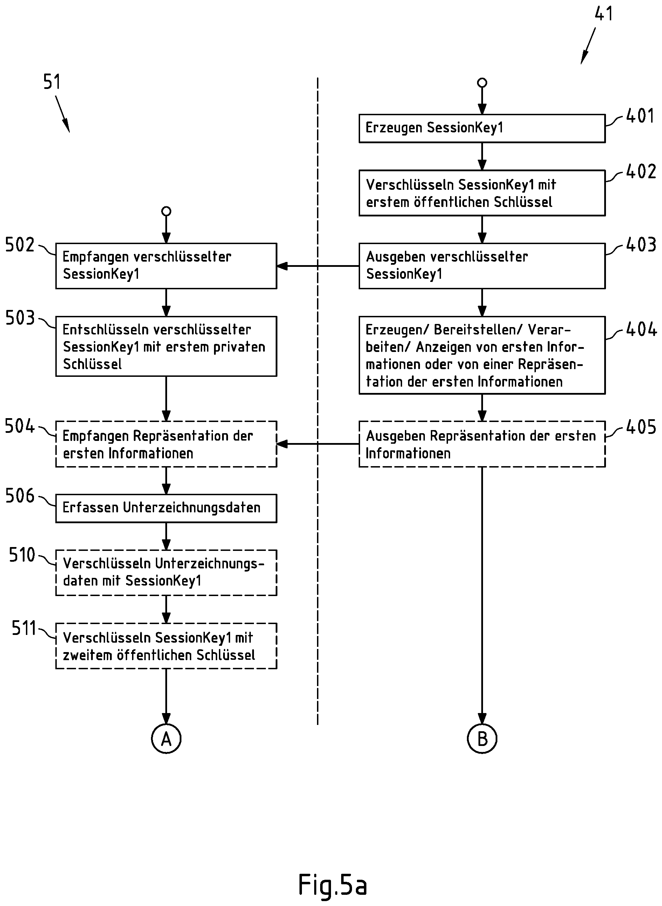

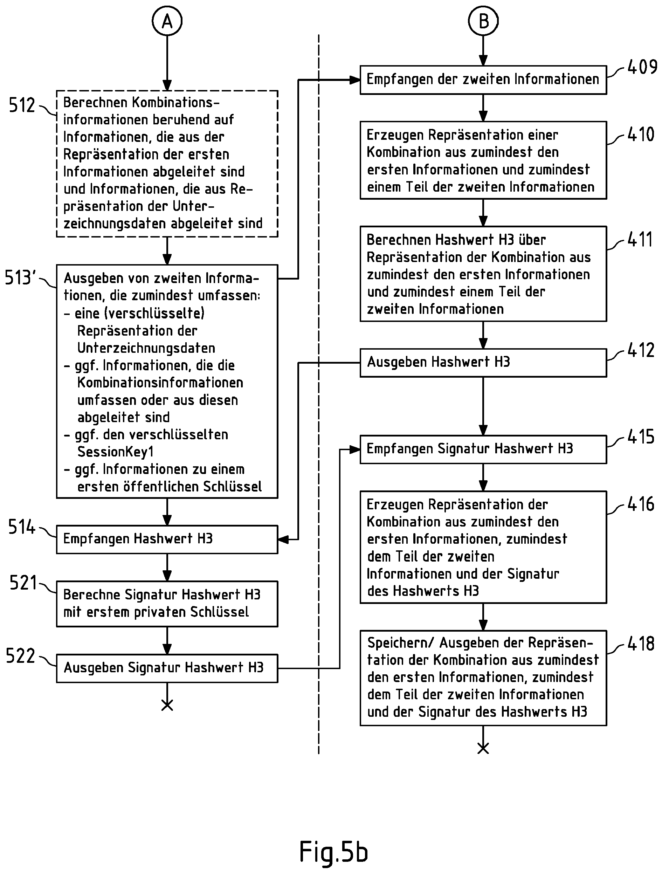

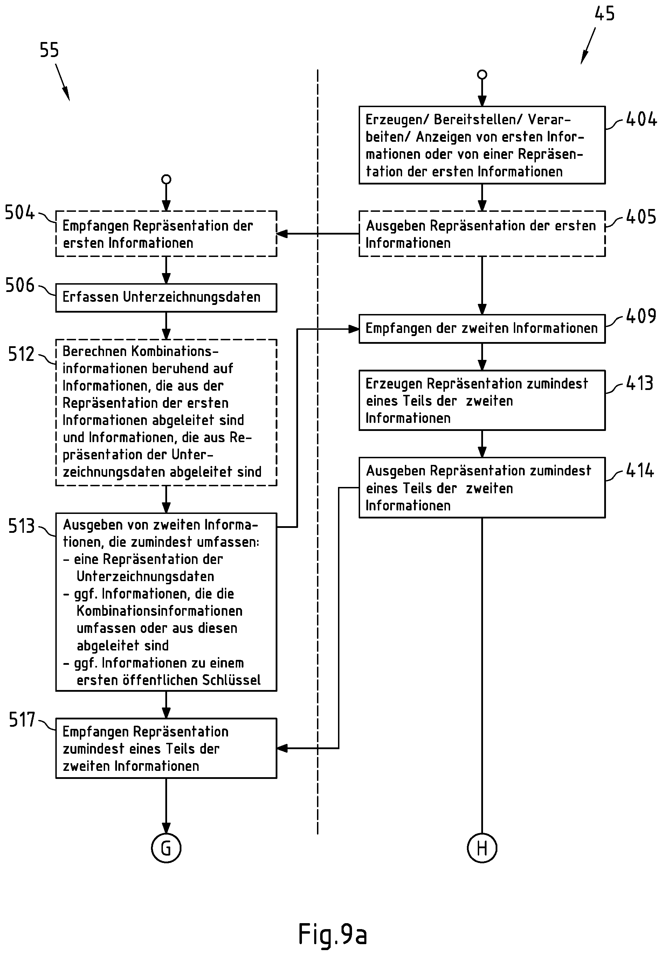

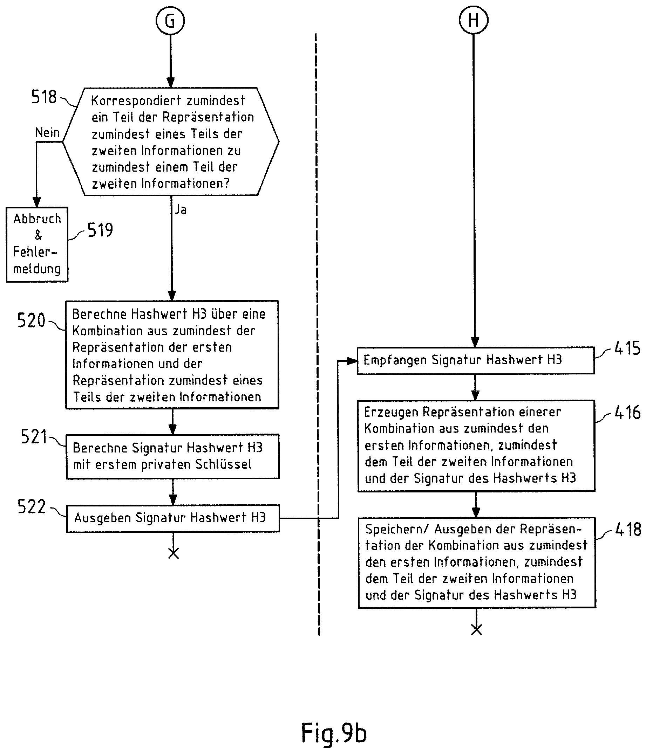

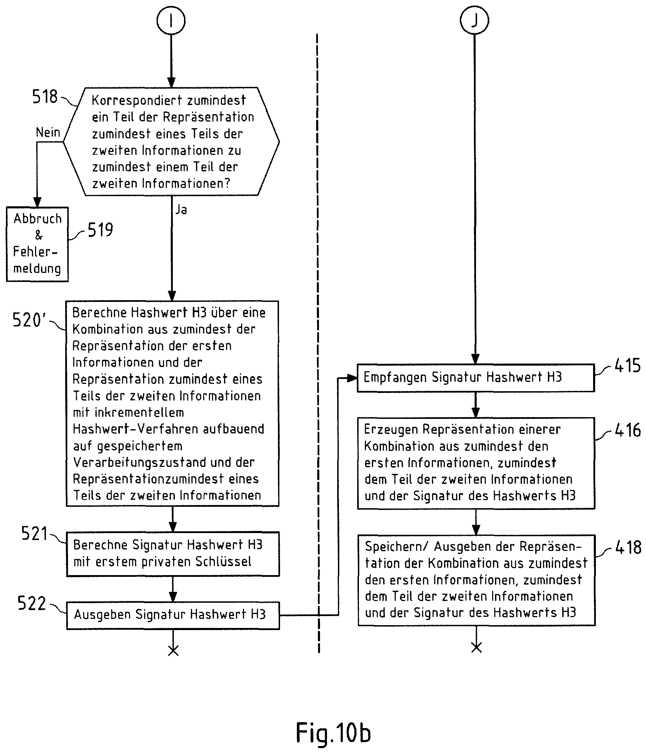

Zunächst wird anhand der Fig. 4 die grundsätzliche Verarbeitung erläutert und diese dann anhand der nachfolgenden Figuren weiter verfeinert bzw. abgewandelt. Die Erläuterungen zu den Schritten der Fig. 4 sollen, soweit sie in den nachfolgenden Fig. 5a/5b-10a/10b auftreten, auch für die jeweiligen Beispiele der Fig. 5a/5b-8 und für die jeweiligen Ausführungsbeispiele der Erfindung der Fig. 9a/9b-10a/10b offenbart gelten.

In Fig. 4 wird das linke Flussdiagramm von der ersten Vorrichtung 1 und das rechte Flussdiagramme 40 von der zweiten Vorrichtung 2 ausgeführt. Die Verarbeitung beginnt mit dem Erzeugen, Bereitstellen, Verarbeiten und/oder Anzeigen von ersten Informationen oder von einer Repräsentation der ersten Informationen im Schritt 404. Wie erläutert können die ersten Informationen beispielsweise den Inhalt eines Vertragsdokuments darstellen. Eine Repräsentation der ersten Informationen kann beispielsweise eine PDF-Repräsentation der ersten Informationen sein, die beispielsweise auf der zweiten Vorrichtung 2 bereitgestellt (z.B. nach Empfang von einer anderen Einheit, z.B. einem Server), erzeugt (beispielsweise nach Abstimmung der Inhalt mit der unterzeichnenden Person), verarbeitet (z.B. geändert) und/oder angezeigt wird.

Im optionalen Schritt 405 wird eine Repräsentation (z.B. eine PDF-Repräsentation) der ersten Informationen an die erste Vorrichtung 1 ausgegeben. Die Repräsentation kann beispielsweise verschlüsselt sein, wie nachfolgend noch genauer ausgeführt wird, um eine Ausspähung während der Kommunikation an die erste Vorrichtung 1 zu erschweren. Wenn Schritt 405 ausgeführt wird, findet auch der optionale Schritt 504 statt, in dem die Repräsentation der ersten Informationen an der ersten Vorrichtung 1 empfangen wird. Die Repräsentation der ersten Informationen kann dann beispielsweise an der ersten Vorrichtung 1 auch zumindest teilweise angezeigt werden.

Im Schritt 506 werden Unterzeichnungsdaten erfasst, wenn eine Person an der ersten Vorrichtung 1 den ersten Informationen zustimmt und diese unterzeichnet, beispielsweise durch Abgabe einer handschriftlichen Unterschrift.

Im optionalen Schritt 512 werden an der ersten Vorrichtung 1 Kombinationsinformationen berechnet, die zumindest auf Informationen, die aus der Repräsentation der ersten Informationen abgeleitet sind (beispielsweise einem Hashwert über die Repräsentation der ersten Informationen) und Informationen, die aus einer (beispielsweise verschlüsselten) Repräsentation der Unterzeichnungsdaten abgeleitet sind (beispielsweise einem Hashwert über die Repräsentation der Unterzeichnungsdaten), beruhen.

Das Kombinieren der Informationen zum Erhalten der Kombinationsinformationen kann beispielsweise eine oder mehrere mathematische Operationen (beispielsweise eine Addition) umfassen. Wenn es sich bei den Informationen, die aus der Repräsentation der ersten Informationen abgeleitet sind, um einen Hashwert handelt (nachfolgend als Hashwert H1 bezeichnet), und es sich bei den Informationen, die aus der Repräsentation der Unterzeichnungsdaten abgeleitet sind, um einen Hashwert handelt (nachfolgend als Hashwert H2 bezeichent), können beispielsweise beide Hashwerte oder Teile davon kombiniert werden, beispielsweise durch Addition oder Verkettung. Zusätzlich können auch weitere Informationen in das Kombinieren einbezogen werden, die beispielsweise von der zweiten Vorrichtung 2 an die erste Vorrichtung 1 übertragen wurden und/oder in der ersten Vorrichtung 1 gespeichert sind. Das Kombinieren verknüpft Informationen über die zu unterzeichnenden ersten Informationen und Informationen über die Unterzeichnungsdaten in den Kombinationsinformationen, die daher als Nachweis verwendet werden können, dass die Unterzeichnungsdaten zu den zu unterzeichnenden ersten Informationen gehören. Die Kombinationsinformationen können ferner zumindest auf einen Teil einer für die erste Vorrichtung 1 charakteristischen Information (z.B. einer Seriennummer), einer Information über den Zeitpunkt der Unterzeichnung der ersten Informationen und/oder einer Information über einen Ort der Unterzeichnung der ersten Informationen (beispielsweise erfassbar mit einem Global Positioning System (GPS) Empfänger eines Mobiltelefons oder mobilen Computers als erster Vorrichtung 1) beruhen.

Im Schritt 513 werden zweite Informationen an die zweite Vorrichtung ausgegeben und im Schritt 409 von der zweiten Vorrichtung empfangen. Diese Übertragung kann wiederum verschlüsselt sein.

Die zweiten Informationen umfassen eine (z.B. verschlüsselte) Repräsentation der Unterzeichnungsdaten. Optional können die zweiten Informationen Informationen zu einem ersten öffentlichen Schlüssel umfassen, der mit einem ersten privaten Schlüssel der ersten Vorrichtung 1 assoziiert ist, beispielsweise den ersten öffentlichen Schlüssel selbst (beispielsweise im Rahmen eines Zertifikats), oder Informationen dazu, wo der erste öffentliche Schlüssel bezogen werden kann (beispielsweise durch Herunterladen aus dem Internet). Alternativ enthalten die zweiten Informationen keine Informationen zu dem ersten öffentlichen Schlüssel. Der erste private Schlüssel wird im nachfolgend noch genauer beschriebenen Schritt 514 zur Signierung eines Hashwerts H3 verwendet. Die Ausgabe der Informationen zu dem ersten öffentlichen Schlüssel im Schritt 513 ermöglicht es, die Signatur des Hashwerts H3 zu überprüfen. Der erste private Schlüssel kann beispielsweise ferner dazu verwendet werden, die im optionalen Schritt 512 berechnete Kombinationsinformation zu signieren. Die Bildung der Signatur kann beispielsweise eine Verschlüsselung der Kombinationsinformationen oder eines Teils davon, oder von Information, die aus den Kombinationsinformationen oder einem Teil davon abgeleitet ist (beispielsweise durch Hashwert-Bildung), mit dem ersten privaten Schlüssel umfassen. Die Signatur der Kombinationsinformationen kann dann beispielsweise ebenfalls Teil der im Schritt 513 ausgegebenen zweiten Informationen sein.

Im Gegensatz zu einer symmetrischen Verschlüsselung wird durch die asymmetrische Verschlüsselung gewährleistet, dass die Signatur der Kombinationsinformationen zwar anhand des ersten öffentlichen Schlüssels außerhalb der ersten Vorrichtung überprüft, aber außerhalb der ersten Vorrichtung nicht mehr verändert werden kann. Dazu wäre die Kenntnis des ersten privaten Schlüssels erforderlich, der aber im Gegensatz zu symmetrischen Schlüsseln nicht einfach (etwa beruhend auf der Kenntnis der einen symmetrischen Schlüssel bestimmenden Parameter) nachgebildet werden kann. Eine Modifikation der Kombinationsinformationen außerhalb der ersten Vorrichtung ist also nur bei Kenntnis des ersten privaten Schlüssels möglich, was beispielsweise dadurch ausgeschlossen werden kann, dass der erste private Schlüssel in der ersten Vorrichtung in nicht auslesbarer Form gespeichert ist.

Der erste private Schlüssel bildet mit dem ersten öffentlichen Schlüssel ein asymmetrisches Schlüsselpaar (beispielsweise im Rahmen eines sog. Public-Key-Verfahrens). Der erste private Schlüssel bildet dabei beispielsweise einen geheimen Teil, während der erste öffentliche Schlüssel einen nicht geheimen Teil darstellt. Der erste öffentliche Schlüssel ermöglicht es beispielsweise Personen, die über den ersten öffentlichen Schlüssel verfügen, Daten für den Inhaber des ersten privaten Schlüssels zu verschlüsseln, dessen digitale Signaturen zu prüfen und/oder ihn zu authentifizieren. Der erste private Schlüssel kann es seinem Inhaber beispielsweise ermöglichen, mit dem ersten öffentlichen Schlüssel verschlüsselte Daten zu entschlüsseln, digitale Signaturen zu erzeugen und/oder sich zu authentisieren. Beispiele für asymmetrische Schlüsselpaare sind Schlüsselpaare nach dem Rivest Shamir Adleman (RSA) Verfahren oder nach dem Verfahren nach McEliece, Rabin, Chor-Rivest oder Elgamal. Der erste private Schlüssel kann beispielsweise ein privater Schlüssel eines RSA-Verfahrens sein. Der erste öffentliche Schlüssel kann beispielsweise in einem X.509 Zertifikat gemäß des ITU-T (Fernmelde-Standardisierungs-Sektor der Internationalen Fernmeldunion) Standards enthalten sein.

Der erste private Schlüssel ist beispielsweise in der ersten Vorrichtung 1 gespeichert und aus der ersten Vorrichtung 1 nicht auslesbar. Der erste private Schlüssel kann beispielsweise in einem nicht-auslesbaren Speicherbereich (beispielsweise ein Flash-Speicherbereich) der ersten Vorrichtung 1 abgelegt sein. Beispielsweise wird der erste private Schlüssel (z.B. einmalig) in den Speicherbereich geschrieben und ist dann zwar durch einen Prozessor (z.B. Prozessor 12) der ersten Vorrichtung 1 lesbar, aber aus der ersten Vorrichtung 1 nicht mehr auslesbar. Anstelle des Auslesens kann dann beispielsweise nur das komplette Neubeschreiben des Speicherbereichs möglich sein. Dies kann beispielsweise durch Setzen eines Auslese-Steuerungsbits erzielt werden (beispielsweise eines Flash-Security-Bits oder Lock-Bits eines Prozessors, beispielsweise eines ATMEL Prozessors).

Beispielsweise wird der erste private Schlüssel und der erste öffentliche Schlüssel in der ersten Vorrichtung 1 erzeugt (beispielsweise durch die erste Vorrichtung 1, beispielsweise durch einen Prozessor 12 der ersten Vorrichtung 1). Das asymmetrische Schlüsselpaar (erster privater und erste öffentlicher Schlüssel) wird also in der ersten Vorrichtung 1 erzeugt, und nicht außerhalb der ersten Vorrichtung 1. Wenn der erzeugte erste private Schlüssel so in der ersten Vorrichtung 1 gespeichert wird, dass er aus der ersten Vorrichtung nicht mehr ausgelesen werden kann, wie beispielhaft bereits oben beschrieben wurde, ist sichergestellt, dass der erste private Schlüssel außerhalb der ersten Vorrichtung 1 nicht bekannt ist und nicht bekannt werden kann.

Das asymmetrische Schlüsselpaar kann beispielsweise einmalig in der ersten Vorrichtung 1 erzeugt werden. Alternativ kann das asymmetrische Schlüsselpaar in regelmäßigen oder unregelmäßigen Abständen neu erzeugt werden. Beispielsweise kann das asymmetrische Schlüsselpaar jedes Mal erzeugt werden, wenn erste Informationen zu unterzeichnen sind (beispielsweise ausgelöst durch den Empfang der Repräsentation der ersten Informationen im Schritt 504). Ein neu erzeugtes asymmetrisches Schlüsselpaar unterscheidet sich dann vorzugsweise von den zuvor erzeugten Schlüsselpaaren, was beispielsweise durch Einbeziehung eines Zufallswertes in den Erzeugungsprozess des asymmetrischen Schlüsselpaares bewerkstelligt werden kann. Die Verwendung eines in der ersten Vorrichtung 1 erzeugten asymmetrischen Schlüsselpaares wird unter anderem dadurch möglich, dass die erste Vorrichtung 1 eine Information zu dem ersten öffentlichen Schlüssel (beispielsweise den ersten öffentlichen Schlüssel selbst) ausgeben kann (vgl. z.B. Schritt 513), die dann zur Entschlüsselung von basierend auf dem ersten privaten Schlüssel verschlüsselten bzw. signierten Inhalten dient.

Alternativ ist der erste private Schlüssel beispielsweise durch einen Benutzer über eine Schnittstelle der ersten Vorrichtung 1 in die erste Vorrichtung 1 übertragbar (in verschlüsselter oder unverschlüsselter Form) und dort speicherbar. Die Übertragung kann beispielsweise über eine drahtlose oder drahtgebundene Schnittstelle erfolgen. Beispielsweise kann der erste private Schlüssel von einem Computer in die erste Vorrichtung 1 übertragbar sein. Vorzugsweise kann der erste private Schlüssel nur einmalig in die erste Vorrichtung 1 übertragen und/oder dort gespeichert werden. Insbesondere kann eine Änderung oder ein Austausch eines in der ersten Vorrichtung 1 gespeicherten ersten privaten Schlüssels ausgeschlossen sein.

Alternativ kann der erste private Schlüssel zumindest kurzzeitig der ersten Vorrichtung 1 zum Erstellen von einer oder mehreren Signaturen von einer anderen Vorrichtung oder einem Medium über eine Schnittstelle zur Verfügung gestellt werden. Der erste private Schlüssel kann beispielsweise auf einer Chipkarte gespeichert sein, die in eine entsprechende Lesevorrichtung, die beispielsweise in der ersten Vorrichtung 1 integriert oder an diese angeschlossen ist, eingeführt werden kann, um einen Zugriff der ersten Vorrichtung 1 auf den ersten privaten Schlüssel zu ermöglichen. Der Zugriff kann beispielsweise erst nach Eingabe eines Passworts (z.B. einer PIN) oder einer sonstigen Berechtigungsprüfung erfolgen. Die erste Vorrichtung 1 kann dann beispielsweise ebenfalls zur Ermöglichung dieser Berechtigungsprüfung eingerichtet sein, kann also beispielsweise eine Benutzerschnittstelle zur Abwicklung dieser Berechtigungsprüfung (beispielsweise eine Tastatur zur Eingabe einer PIN), aufweisen.

Das aus dem ersten öffentlichen Schlüssel und dem ersten privaten Schlüssel gebildete erste asymmetrische Schlüsselpaar kann für jede erste Vorrichtung einzigartig sein, sich also von den asymmetrischen Schlüsselpaaren, die bei anderen ersten Vorrichtungen zum Einsatz kommen, unterscheiden, was einen generellen Angriff gegen mehrere erste Vorrichtungen erschwert. Alternativ kann das erste asymmetrische Schlüsselpaar allerdings für zumindest einige erste Vorrichtungen einer Gruppe von ersten Vorrichtungen (oder alle ersten Vorrichtungen) gleich sein.

Im Schritt 410 wird dann eine Repräsentation einer Kombination aus zumindest den ersten Informationen und zumindest einem Teil der zweiten Informationen erzeugt. Es kann sich dabei insbesondere um die vollständigen zweiten Informationen handeln. Die Kombination kann auch weitere Elemente umfassen, allerdings auch auf die ersten Informationen und die zweiten Informationen (oder einen Teil davon) beschränkt sein. Bevorzugt werden sämtliche zweiten Informationen mit den ersten Informationen kombiniert. Die Repräsentation der Kombination der ersten Informationen und zumindest eines Teils der zweiten Informationen ist beispielsweise eine PDF-Repräsentation (natürlich sind allerdings auch andere Formate möglich). Wenn nachfolgend bei der Beschreibung des Verfahrens 40 von einem Teil der zweiten Informationen die Rede ist, ist damit der Teil der zweiten Informationen gemeint, der zusammen mit den ersten Informationen in der Kombination enthalten ist, für die in Schritt 410 eine Repräsentation erzeugt wird. Beispielsweise können die zweiten Informationen als sog. inkrementelles PDF-Update an eine PDF-Repräsentation der ersten Informationen angefügt werden (insbesondere die Repräsentation der ersten Informationen aus den Schritten 404 und optional 405 und 504), ohne diese PDF-Repräsentation zu verändern. Die PDF-Repräsentation der ersten Informationen bildet dann zusammen mit dem inkrementellen PDF-Update beispielsweise ein einheitliches PDF-Dokument. Die Verwendung inkrementeller PDF-Updates ist dem Fachmann zur Erstellung von Überarbeitungsversionen eines Dokuments bekannt, vgl. z.B. "Developing with PDF: Dive Into the Portable Document Format" von Leonard Rosenthol, O'Reilly Media Inc., Erste Ausgabe, Oktober 2013, ISBN 978-1-449-32791-0, S. 18-20.

Im Schritt 411 wird ein Hashwert H3 über die Repräsentation der Kombination aus zumindest den ersten Informationen und zumindest einem Teil der zweiten Informationen, also die im Schritt 410 erzeugte Repräsentation, erzeugt, im Schritt 412 an die erste Vorrichtung 1 ausgegeben (z.B. verschlüsselt) und im Schritt 514 von der ersten Vorrichtung 1 empfangen.

Beispiele für Hash-Algorithmen zur Bestimmung von Hashwerten sind die Secure Hash (SHA) Varianten SHA-1, SHA-224, SHA-256, SHA-384 und SHA-512, die im Dokument "Secure Hash Standard (SHS)", Federal Information Processing Standards (FIPS) PUB 180-3, Information Technology Laboratory, National Institute of Standards and Technology, Gaithersburg, MD 20899-8900, Oktober 2008, spezifiziert werden.

Durch die Bildung des Hashwerts wird die Integrität der Repräsentation der Kombination aus zumindest den ersten Informationen und zumindest einem Teil der zweiten Informationen sichergestellt. Jede Änderung der ersten Informationen oder der zweiten Informationen oder deren Repräsentation würde unweigerlich zu einem anderen Hashwert als dem Hashwert H3 führen.

Um zudem Manipulationen an dem Hashwert H3 auszuschließen, wird für den Hashwert H3 im Schritt 521 unter Verwendung des ersten privaten Schlüssels der ersten Vorrichtung 1 eine Signatur erstellt (beispielsweise durch Verschlüsselung des Hashwerts H3 mit dem ersten privaten Schlüssel, wobei das Resultat dann die Signatur darstellt, oder durch Verschlüsselung eines Werts, der durch Anwendung einer Funktion oder Operation auf den Hashwert H3 erhalten wird, wobei das Resultat dann die Signatur darstellt), diese Signatur über den Hashwert H3 im Schritt 522 an die zweite Vorrichtung 2 ausgegeben (z.B. verschlüsselt) und im Schritt 415 von der zweiten Vorrichtung empfangen.

Im Schritt 416 wird dann an der zweiten Vorrichtung 2 eine Repräsentation einer Kombination aus zumindest (oder lediglich) den ersten Informationen, zumindest dem Teil der zweiten Informationen (insbesondere dem Teil der zweiten Informationen aus dem Schritt 410) und der Signatur des Hashwerts H3 erzeugt. Bei der Repräsentation kann es sich beispielsweise um eine PDF-Repräsentation, also insbesondere ein einzelnes PDF-Dokument, handeln. Die PDF-Repräsentation kann beispielsweise aus der zum Schritt 410 beschriebenen PDF-Repräsentation durch Einfügen der Signatur des Hashwerts H3 erhalten werden. Beispielsweise ist dazu in der zu Schritt 410 beschriebenen PDF-Repräsentation (einer Kombination aus zumindest den ersten Informationen und zumindest einem Teil der zweiten Informationen) ein Platzhalter vorgesehen, der bei der Berechnung des Hashwerts H3 nicht berücksichtigt wird, in den aber die Signatur des Hashwerts H3 eingebettet werden kann. Vorteilhaft ist der Platzhalter in dem bereits zu Schritt 410 beschriebenen inkrementellen PDF-Update vorgesehen, das zumindest den Teil der zweiten Informationen beinhaltet. In PDF-Dokumenten kann beispielsweise durch das ByteRange-Element festgelegt werden, über welche Bestandteile eines PDF-Dokuments ein Hashwert gebildet werden soll und an welcher Stelle und mit welcher Länge im PDF-Dokument die Signatur des Hashwerts platziert werden soll.

Im Schritt 418 wird die im Schritt 416 erzeugte Repräsentation gespeichert und/oder an eine andere Vorrichtung (z.B. einen Server) ausgegeben, beispielsweise zur Archivierung und oder Weiterverarbeitung.

Der anhand der Fig. 4 beschriebene Prozess liefert also im Ergebnis eine Repräsentation einer Kombination aus zumindest den ersten zu unterzeichnenden Informationen, zumindest einem Teil von zweiten Informationen, die eine Repräsentation von Unterzeichnungsdaten umfassen, und einer von dem ersten Vorrichtung erstellten Signatur eines Hashwert über eine Repräsentation einer Kombination aus zumindest den ersten Informationen und zumindest dem Teil von zweiten Informationen. Damit liegt also eine Verbindung der ersten Informationen und zumindest eines Teils der zweiten Informationen vor, die ohne Manipulation des Hashwerts H3 nicht veränderbar ist. Dieser Manipulation des Hashwerts H3 wird aber durch die Signierung mit dem ersten privaten Schlüssel der ersten Vorrichtung 1 entgegengewirkt. Diese Signatur ist in der im Schritt 416 erzeugten Repräsentation ebenfalls enthalten. Die im Schritt 416 erzeugte Repräsentation spiegelt also wider, welche ersten Informationen unterzeichnet wurden, enthält Informationen zu den diesbezüglichen Unterzeichnungsdaten und eine nur schwer manipulierbare Bindung dieser Informationen aneinander. Dass weder die ersten Information noch zumindest der Teil der zweiten Informationen manipuliert wurde, kann anhand der Signatur des Hashwerts H3 geprüft werden, wenn der mit dem ersten privaten Schlüssel assoziierte erste öffentliche Schlüssel bekannt ist. Wie erläutert kann zu diesem Zweck der erste öffentliche Schlüssel in den zweiten Informationen enthalten und mithin in der im Schritt 416 erzeugten Repräsentation enthalten sein, oder anderweitig zur Vornahme dieser Prüfung bezogen werden (insbesondere wenn diesbezügliche Informationen in den zweiten Informationen enthalten sind).

Im Ablauf der Fig. 4 besteht grundsätzlich insbesondere im Schritt 410 die Möglichkeit, Manipulationen an den ersten Informationen vorzunehmen. Dem kann durch die in Schritt 412 beschriebene Berechnung von Kombinationsinformationen entgegengewirkt werden. Dazu wird der ersten Vorrichtung wie zu den Schritten 405 und 504 beschrieben eine Repräsentation der ersten Informationen zur Verfügung gestellt und eine daraus abgeleitete Informationen (z.B. ein Hashwert) zumindest mit Informationen (z.B. einem Hashwert) kombiniert, die aus einer Repräsentation der Unterzeichnungsdaten abgeleitet sind. Damit wird mit den Kombinationsinformationen bereits in der Vorrichtung 1 eine Bindung der ersten Informationen an die zweiten Informationen geschaffen, die vorteilhaft mit dem ersten privaten Schlüssel signiert und die somit erhaltene Signatur als Bestandteil der zweiten Informationen in den Schritten 513 und 409 an die zweite Vorrichtung ausgegeben und in die im Schritt 410 erzeugte Repräsentation integriert wird. Damit enthält auch die finale Repräsentation aus Schritt 416 diese Signatur, die wiederum anhand des ersten öffentlichen Schlüssels geprüft werden kann um sicherzustellen, dass die finale Repräsentation aus Schritt 416 auf ersten Informationen und Unterzeichnungsdaten beruht, die in genau dieser Form in der ersten Vorrichtung 1 vorlagen.

Im Folgenden wird anhand der Fig. 5a/5b ein Beispiel beschrieben, dass den ersten Aspekt beinhaltet. Insbesondere wird hier ein Sitzungsschlüssel (SessionKeyl) verwendet, um den Datenaustausch zwischen der ersten Vorrichtung 1 und der zweiten Vorrichtung 2 zu verschlüsseln, und/oder um die in der ersten Vorrichtung erfassten Unterzeichnungsdaten zu verschlüsseln.

Dazu werden gegenüber dem zweiten Verfahren 40 der Fig. 4 im zweiten Verfahren 41 der Fig. 5a/5b die Schritte 401-403 ergänzt, während gegenüber dem ersten Verfahren 50 der Fig. 4 im zweiten Verfahren 51 der Fig. 5a/5b die Schritte 502-503 und 510-511 ergänzt und der Schritt 513 modifiziert werden, um den Schritt 513' zu erhalten.

Der zur Verschlüsselung verwendete SessionKeyl ist ein symmetrischer Schlüssel, ist also bei beiden Kommunikationspartnern identisch. Die symmetrische Verschlüsselung kann beispielsweise auf einem der folgenden Verfahren beruhen: Advanced Encryption Standard (AES), Data Encryption Standard (DES), Data Encryption Algorithm (DEA), Triple-DES, International Data Encryption Algorithm (IDEA), Blowfish, Quick Stream Cipher (QUISCI), Twofish oder einem CAST- oder Rivest Cipher-(RC)-Verfahren. Als Startwert für diese Verfahren - soweit erforderlich - kann beispielsweise ein Wert dienen, der von einer Zufallszahl und/oder einer aktuellen Zeit und/oder weiteren Informationen (beispielsweise einem aktuellen Zustand der zweiten Vorrichtung 2, oder einem Charakteristikum der Sitzung, in der die Unterzeichnung der ersten Informationen stattfinden soll) abhängt.

Im Schritt 401 erzeugt die zweite Vorrichtung 2 den SessionKeyl. Dieser SessionKeyl wird dann im Schritt 402 mit dem ersten öffentlichen Schlüssel, der zu dem bereits diskutierten ersten privaten Schlüssel der Vorrichtung korrespondiert, verschlüsselt. Der erste öffentliche Schlüssel kann der zweiten Vorrichtung 2 beispielsweise bei erstmaliger Inbetriebnahme der ersten Vorrichtung 1 bekannt gemacht werden, beispielsweise von der ersten Vorrichtung 1, oder kann von einem Server (beispielsweise von einem Server des Herstellers der ersten Vorrichtung 1) auf die zweite Vorrichtung 2 heruntergeladen werden (bevorzugt über eine gesicherte Verbindung) oder von einem Datenträger, der mit der ersten Vorrichtung 1 geliefert wird, auf der zweiten Vorrichtung 2 installiert werden.

Im Schritt 403 wird der verschlüsselte SessionKeyl an die erste Vorrichtung 1 ausgegeben. Diese empfängt den verschlüsselten SessionKeyl und entschlüsselt diesen mit ihrem ersten privaten Schlüssel.

Ab diesem Zeitpunkt haben sowohl die erste Vorrichtung 1 als auch die zweite Vorrichtung 2 den identischen SessionKeyl vorliegen und können diesen zur symmetrischen Verschlüsselung ihrer Kommunikation einsetzten, beispielsweise zur Verschlüsselung der in einigen oder allen der Schritte 405/504, 513'/409, 412/514 und 522/415 ausgetauschten Informationen.

Zusätzlich oder alternativ zu der Verschlüsselung des Datenaustauschs zwischen der ersten Vorrichtung 1 und der zweiten Vorrichtung 2 kann der SessionKeyl verwendet werden, um die im Schritt 506 erfassten Unterzeichnungsdaten nach einem hybriden Verschlüsselungsverfahren zu verschlüsseln. Dazu werden die Unterzeichnungsdaten im Schritt 510 symmetrisch mit dem SessionKeyl verschlüsselt. Zusätzlich wird der SessionKeyl selbst im Schritt 511 mit einem an der ersten Vorrichtung 1 vorhandenen zweiten öffentlichen Schlüssel verschlüsselt, der mit einem zweiten privaten Schlüssel assoziiert ist. Dieser zweite private Schlüssel ist beispielsweise an einer vertrauenswürdigen Stelle hinterlegt, beispielsweise bei einem Notar oder einer Zertifizierungsautorität, und daher nur verhältnismäßig aufwändig und/oder unter Auflagen zu beschaffen ist. Der zweite private Schlüssel ist beispielsweise nicht in der ersten Vorrichtung 1 und/oder nicht in der zweiten Vorrichtung 2 bekannt. Der zweite öffentliche Schlüssel wird beispielsweise bei der Produktion oder erstmaligen Inbetriebnahme der ersten Vorrichtung 1 in diese eingespeichert, beispielsweise durch Übertragung von der zweiten Vorrichtung 2, die den zweiten öffentlichen Schlüssel von einem Datenträger oder von einem Server bezogen hat. Es ist auch denkbar, dass der zweite öffentliche Schlüssel auf einem von der ersten Vorrichtung 1 lesbaren Datenträger, beispielsweise einer Speicherkarte, gelesen wird. Das zweite asymmetrische Schlüsselpaar, das den zweiten öffentlichen Schlüssel und den zweiten privaten Schlüssel umfasst, kann für jede erste Vorrichtung 1 einzigartig sein, also für unterschiedliche erste Vorrichtungen einer Gruppe von ersten Vorrichtungen unterschiedlich sein, was einen generellen Angriff gegen eine Vielzahl von ersten Vorrichtungen erheblich erschwert, oder kann für zumindest einige erste Vorrichtungen der Gruppe von ersten Vorrichtungen (oder für alle ersten Vorrichtungen) gleich sein. Die durch die Schritte 510 und 511 realisierte hybride Verschlüsselung hat den Vorteil, dass im Schritt 510 die im Vergleich zur asymmetrischen Verschlüsselung der Unterzeichnungsdaten weniger komplexe (und damit beispielsweise schnellere) symmetrische Verschlüsselung der Unterzeichnungsdaten beruhend auf dem SessionKeyl angewendet werden kann. Wenn dann der gemäß Schritt 511 asymmetrisch verschlüsselte SessionKeyl im Schritt 513' als Teil der zweiten Informationen ausgegeben und diese in die in den Schritten 410 bzw. 416 erzeugten Repräsentationen (z.B. die PDF-Repräsentationen) integriert ist, ist außerhalb der ersten Vorrichtung 1 und der zweiten Vorrichtung 2 zur Entschlüsselung der Unterzeichnungsdaten zwingend die Kenntnis des zweiten privaten Schlüssels erforderlich, um die verschlüsselten Unterzeichnungsdaten entschlüsseln (und ggf. manipulieren) zu können.

Da der SessionKeyl auch an der zweiten Vorrichtung bekannt ist, kann als Alternative zur in der Fig. 5a/5b vorgestellten Vorgehensweise auch wie folgt vorgegangen werden: Der Schritt 511 entfällt, und entsprechend wird im Schritt 513' auf die Ausgabe des verschlüsselten SessionKeyl in den zweiten Informationen verzichtet. Stattdessen findet die Verschlüsselung des SessionKeyl mit dem zweiten öffentlichen Schlüssel in der zweiten Vorrichtung 2 statt, und der verschlüsselte SessionKeyl wird dann beispielsweise im Schritt 410 den zweiten Informationen hinzugefügt, so dass er in der Repräsentation der Kombination aus zumindest den ersten Informationen und zumindest einem Teil der zweiten Informationen enthalten ist (und entsprechend in der im Schritt 416 erzeugten Repräsentation, die zusätzlich die Signatur des Hashwerts H3 umfasst). Dazu ist lediglich die Kenntnis des zweiten öffentlichen Schlüssels an der zweiten Vorrichtung 2 erforderlich.

Allerdings kann es bevorzugt sein, die Verschlüsselung des SessionKeyl wie in Fig. 5a/5b gezeigt an der ersten Vorrichtung 1 vorzunehmen, da die erste Vorrichtung aufgrund ihrer proprietären Struktur und ihrer eingeschränkten Kommunikation zu anderen Vorrichtungen in der Regel besser gegen Angriffe, Trojaner und Viren geschützt werden kann als die zweite Vorrichtung 2, bei der es sich insbesondere um einen Computer handeln kann, der üblicherweise häufig Zugang zum Internet hat.

Es sei an dieser Stelle erwähnt, dass für die Schritte 402 und 503 auch ein anderes asymmetrisches Schlüsselpaar verwendet werden kann als das erste asymmetrische Schlüsselpaar, das den ersten öffentlichen Schlüssel und den ersten privaten Schlüssel enthält und u.a. zur Bildung der Signatur des Hashwerts H3 (Schritt 521) und ggf. einer Signatur der Kombinationsinformationen (z.B. in Schritt 513') verwendet wird. Das andere asymmetrische Schlüsselpaar kann aber die gleichen Eigenschaften aufweisen wie das erste asymmetrische Schlüsselpaar, also beispielsweise einen nicht aus der ersten Vorrichtung 1 auslesbaren privaten Schlüssel aufweisen, einmalig oder mehrmals erzeugt werden, etc. Eine Ausgabe des öffentlichen Schlüssels dieses Schlüsselpaars als Teil der zweiten Informationen (Schritt 513') ist dann allerdings nicht nötig (es muss allerdings sichergestellt sein, dass die zweite Vorrichtung 2 den öffentlichen Schlüssel erhalten kann, beispielsweise von der ersten Vorrichtung 1, oder von einem Datenträger oder Server, um den Schritt 402 ausführen zu können).

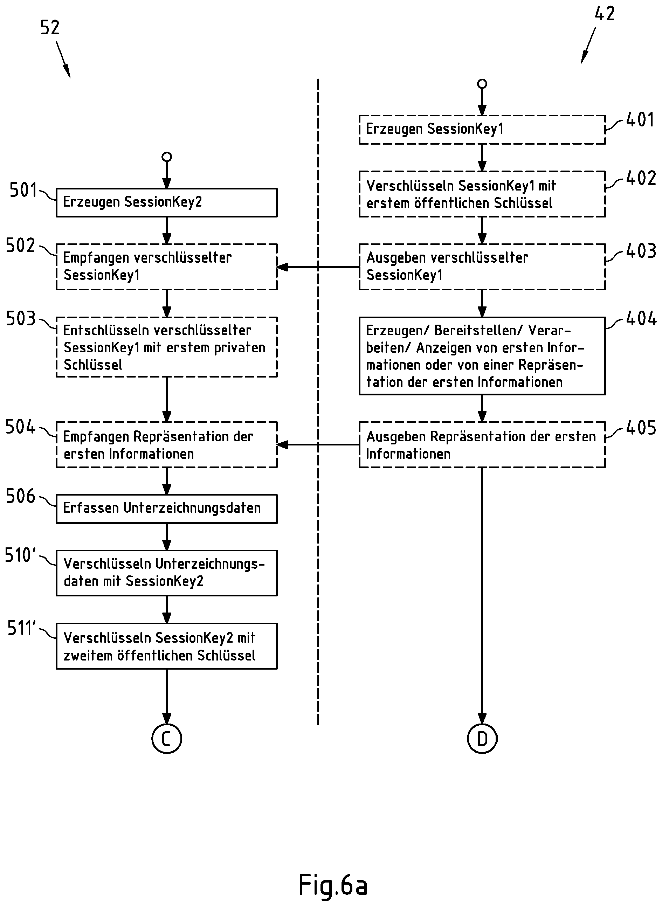

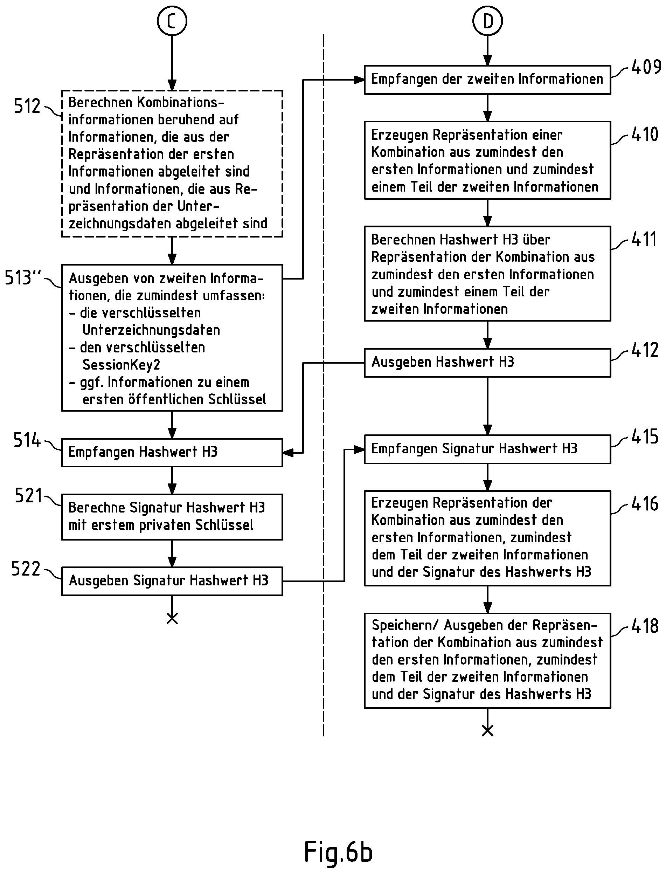

Unter Bezugnahme auf die Fig. 6a/6b wird nun gemäß dem zweiten Aspekt eine Alternative oder Ergänzung zum Verfahren der Fig. 5a/5b vorgestellt. Insbesondere wird im Beispiel der Fig. 6a/6b ein Sitzungsschlüssel SessionKey2 lokal in der ersten Vorrichtung 1 erzeugt und zur hybriden Verschlüsselung der Unterzeichnungsdaten eingesetzt.

Dementsprechend ist im ersten Verfahren 52 der Fig. 6a/6b gegenüber dem Verfahren 51 der Fig. 6a/6b ein zusätzlicher Schritt 501 zur Erzeugung des SessionKey2 vorhanden, und die Schritt 510 und 511 wurden in die modifizierten Schritte 510' und 511' umgewandelt, in denen statt des SessionKeyl der SessionKey2 zum Einsatz kommt. Entsprechend wird im Schritt 513" gegenüber dem Schritt 513' der Fig. 5a/5b auch ein verschlüsselter SessionKeyl statt des verschlüsselten SessionKey2 ausgegeben.

Die Verwendung des in der ersten Vorrichtung 1 erzeugten SessionKey2 hat gegenüber dem in der zweiten Vorrichtung 2 erzeugten SessionKeyl den Vorteil, dass der SessionKey2 in der zweiten Vorrichtung 2 nicht bekannt ist, also außerhalb der ersten Vorrichtung 1 nur mithilfe des zweiten privaten Schlüssels, der bei einer vertrauenswürdigen Stelle hinterlegt ist, wiedergewonnen werden kann. Dies stellt gegenüber dem Beispiel der Fig. 5a/5b einen zusätzlichen Sicherheitsgewinn dar, insbesondere vor der potentiell leichteren Exposition/Angreifbarkeit der zweiten Vorrichtung 2 im Vergleich zur ersten Vorrichtung 1.

Im Beispiel der Fig. 6a/6b sind dennoch die Erzeugung des SessionKeyl an der zweiten Vorrichtung 2, dessen Übertragung an die erste Vorrichtung 1 und die dortige Wiedergewinnung gemäß den Schritten 401-403 und 502-503 als optionale Schritte aufgeführt, da der SessionKeyl natürlich weiterhin zur symmetrischen Verschlüsselung des Datenaustauschs zwischen der ersten Vorrichtung 1 und der zweiten Vorrichtung 2 eingesetzt werden kann.

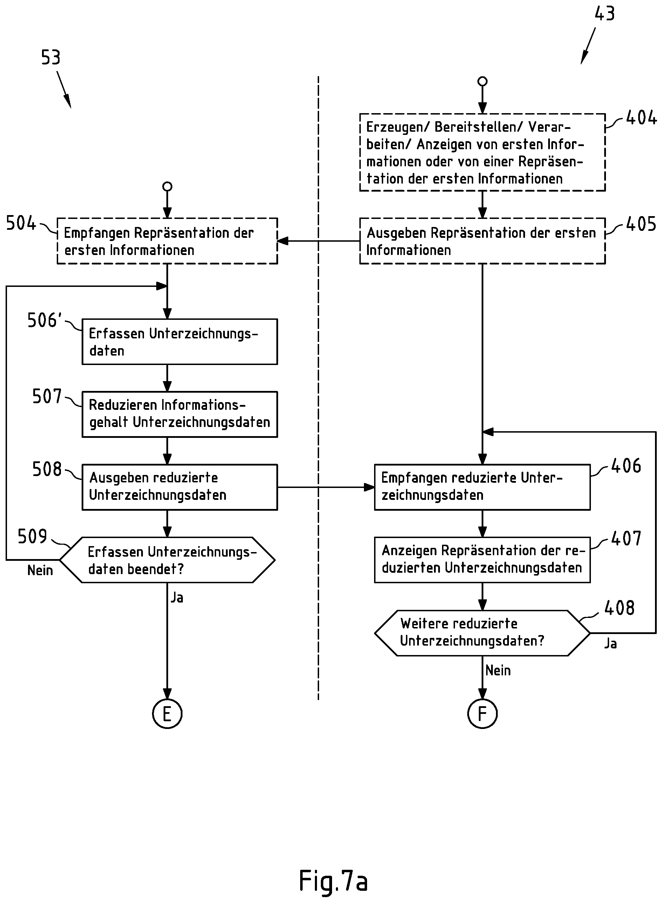

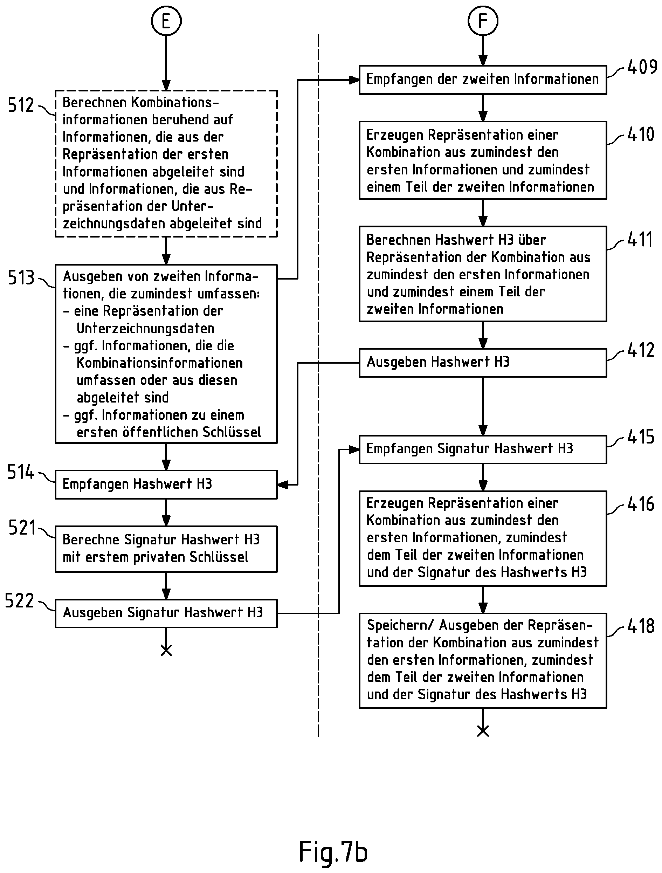

Unter Bezugnahme auf die Fig. 7a/7b wird nunmehr gemäß dem dritten Aspekt eine weitere Weiterbildung der in Fig. 4 beschriebenen Verarbeitung vorgestellt. Die Veränderungen gegenüber der Fig. 4 betreffen den modifizierten Schritt 506' und die neuen Schritte 507-509 des ersten Verfahrens 53 und die neuen Schritte 406-408 des zweiten Verfahrens 43.

Das erste Verfahren 53 umfasst gemäß dem dritten Aspekt insbesondere ein Reduzieren des Informationsgehalts der erfassten Unterzeichnungsdaten, um reduzierte Unterzeichnungsdaten zu erhalten, und ein Ausgeben der reduzierten Unterzeichnungsdaten an eine zweite Vorrichtung.

Dieser Vorgang ist anhand der Schritte 506'-509 in Fig. 7a/7b dargestellt. Gegenüber dem Schritt 506 der Fig. 4 wird durch den Schritt 506' der Fig. 7a/7b verdeutlich, dass die Unterzeichnungsdaten in einem iterativen Prozess während des Unterzeichnungsvorgangs erfasst werden. Im Falle einer handschriftlichen Unterschrift betrifft der Schritt 506' die Erfassung von ein oder mehreren Tupeln von Abtastwerten, wobei jedes Tupel beispielsweise zumindest x/y-Koordinaten des Digitizers 15 (vgl. Fig. 1) beinhaltet. Zusätzlich können in jedem Tupel auch ein Zeitstempel und/oder ein Wert, der repräsentativ für den jeweiligen von der Person bei der Unterzeichnung mit dem Stift 11 auf den Digitizer an der durch die x/y-Koordinaten definierten Stelle ausgeübten Druck ist, enthalten sein.

Es ist grundsätzlich wünschenswert, diese erfassten Abtastwerte während des Unterzeichnungsvorgangs, also während die Unterzeichnung (z.B. die Abgabe der handschriftlichen Unterschrift) noch nicht beendet ist, an die zweite Vorrichtung zu übertragen, um dort eine Repräsentation der bisher erfassten Unterzeichnungsdaten anzeigen zu können, beispielsweise zusammen mit einer Repräsentation der ersten zu unterzeichnenden Informationen. Die unterzeichnende Person und ggf. ihr Vertrags/Transaktionspartner können dann auf der Anzeigeeinheit 26 der zweiten Vorrichtung 2 verfolgen, wie die Unterzeichnungsdaten (z.B. die Unterschrift) an der ersten Vorrichtung 1 erfasst wird.

Obwohl die im Schritt 506' erfassten Unterzeichnungsdaten verschlüsselt von der ersten Vorrichtung 1 an die zweite Vorrichtung 2 übertragen werden können (beispielsweise verschlüsselt mit dem SessionKeyl, vgl. die Beschreibung der Fig. 5a/5b), stellt die Ausgabe der erfassten Unterzeichnungsdaten an die zweite Vorrichtung 2 ein potentielles Sicherheitsrisiko dar, da die erfassten Unterzeichnungsdaten bei der Übertragung ausgespäht werden könnten und basierend auf den Unterzeichnungsdaten Manipulationsversuche an dem aktuellen Unterzeichnungsprozess unternommen oder die erfassten Unterzeichnungsdaten für andere Transaktionen missbraucht werden könnten.

Um dies zu vereiteln, wird gemäß dem dritten Aspekt zunächst im Schritt 507 eine Reduzierung des Informationsgehalts der erfassten Unterzeichnungsdaten vorgenommen, und lediglich diese reduzierten Unterzeichnungsdaten werden im Schritt 508 von der ersten Vorrichtung 1 an die zweite Vorrichtung 2 ausgegeben. Die Schritte 506', 507 und 508 werde so lange wiederholt, bis das Erfassen der Unterzeichnungsdaten beendet ist, also die Unterschrift abgegeben wurde, was im Schritt 509 geprüft wird.

Entsprechend werden an der zweiten Vorrichtung 2 die reduzierten Unterzeichnungsdaten im Schritt 406 empfangen, und eine Repräsentation der reduzierten Unterzeichnungsdaten wird im Schritt 407 angezeigt. Die Schritte 406 und 407 werden so lange wiederholt, bis keine weiteren reduzierten Unterzeichnungsdaten empfangen werden, was im Schritt 408 geprüft wird.

Wie erläutert kann zusätzlich in den Schritten 508 eine symmetrische Verschlüsselung der reduzierten Unterzeichnungsdaten und im Schritt 406 eine Entschlüsselung der verschlüsselten reduzierten Unterzeichnungsdaten erfolgen, beispielsweise basierend auf dem SessionKeyl.

Durch die Reduzierung des Informationsgehalts der Unterzeichnungsdaten stimmen die reduzierten Unterzeichnungsdaten, die an die zweite Vorrichtung ausgegeben werden, insbesondere nicht mehr mit den Unterzeichnungsdaten überein, deren (beispielsweise verschlüsselte) Repräsentation als Teil der zweiten Informationen im Schritt 513 an die zweite Vorrichtung 2 ausgegeben und dann dort mit den ersten Informationen in eine gemeinsame Repräsentation integriert wird, und die als Grundlage für die Berechnung der Kombinationsinformationen im Schritt 512 dienen. Etwaige bei der Übertragung von der ersten Vorrichtung 1 an die zweite Vorrichtung 2 ausgespähte reduzierte Unterzeichnungsdaten helfen daher nicht bei Manipulationsversuchen des aktuellen Unterzeichnungsvorgangs, der auf abweichenden (detaillierteren) Unterzeichnungsdaten beruht.

Wie bereits erläutert können die im Schritt 506' erfassten Unterzeichnungsdaten erfasste Unterschriftsdaten umfassen, die eine erfasste handschriftliche Unterschrift der Person repräsentieren. Das Reduzieren im Schritt 507 kann dann beispielsweiser zumindest eines der folgenden umfassen: Weglassen zumindest eines Teils von in den erfassten Unterschriftsdaten enthaltener Zeitinformation, insbesondere von einem oder mehreren (beispielsweise allen) in den erfassten Unterschriftsdaten enthaltenen Zeitstempeln; Weglassen zumindest eines Teils (oder von allen) von in den erfassten Unterschriftsdaten enthaltenen Druckinformationen; und Weglassen von einer oder mehreren in den erfassten Unterschriftsdaten enthaltenen Unterschriftskoordinaten (beispielsweise wird nur jedes n-te x/y-Koordinatenpaar, oder nur jedes n-te erfasste Tupel von Unterzeichnungsdaten an die zweite Vorrichtung übertragen, wobei n eine natürliche Zahl darstellt, die größer als 1 ist, beispielsweise n=2, 4 oder 8, um nur ein paar Beispiele zu nennen).

Wie in Fig. 7a/7b dargestellt kann das Reduzieren des Informationsgehalts der erfassten Unterzeichnungsdaten und/oder das Ausgeben der reduzierten Unterzeichnungsdaten zumindest teilweise zeitlich überlappend mit dem Erfassen der Unterzeichnungsdaten erfolgen, insbesondere um das Anzeigen einer Repräsentation der reduzierten Unterzeichnungsdaten an der zweiten Vorrichtung zumindest teilweise zeitlich überlappend mit dem Erfassen der Unterzeichnungsdaten zu ermöglichen.

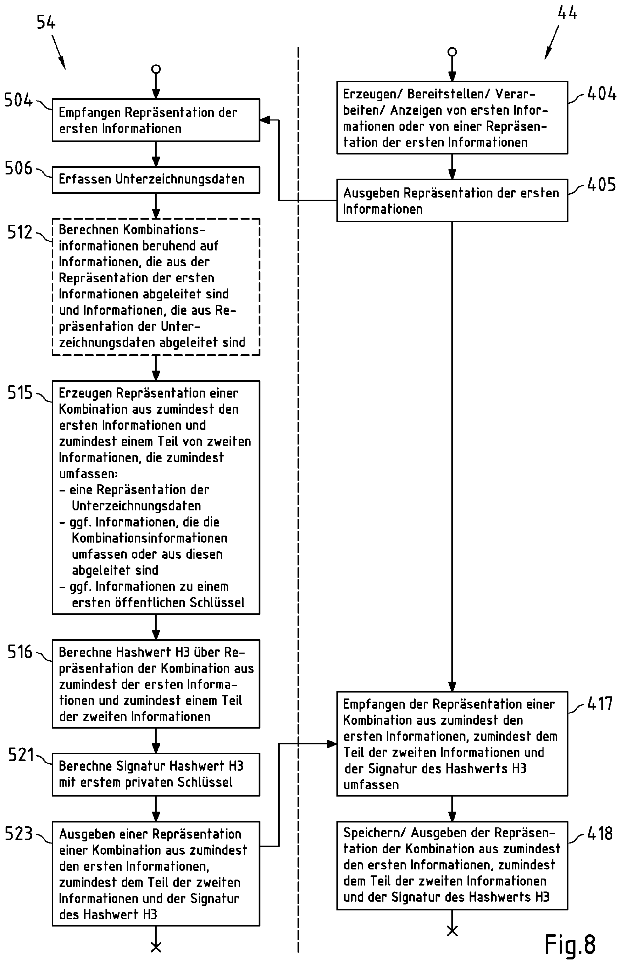

Anhand der Fig. 8 wird nun eine Abwandlung der Verfahren der Fig. 4 gemäß dem vierten Aspekt vorgestellt.

Wie bereits zu den Verfahren der Fig. 4 ausgeführt wurde, besteht ein potentielles Sicherheitsrisiko darin, dass die Repräsentation der Kombination der ersten (zu unterzeichnenden) Informationen und zumindest des Teils der zweiten Informationen (umfassend die Repräsentation der Unterzeichnungsdaten) gemäß Schritt 410 in der zweiten Vorrichtung 2 stattfindet, und dort auch der Hashwert H3 über diese Repräsentation gebildet wird. Grundsätzlich könnte bei einer Infizierung der zweiten Vorrichtung 2 mit Schadsoftware noch im Schritt 410 eine Manipulation beispielsweise der ersten Informationen erfolgen, die durch den Hashwert H3 nicht aufdeckbar wäre. Wie bereits erläutert kann dieses Sicherheitsrisiko durch die im Schritt 512 berechneten Kombinationsinformationen reduziert werden.

Zusätzlich oder alternativ kann aber auch vorgesehen werden, die Bildung der Repräsentation der Kombination der ersten (zu unterzeichnenden) Informationen und zumindest des Teils der zweiten Informationen (umfassend die Repräsentation der Unterzeichnungsdaten) in der ersten Vorrichtung 1 statt in der potentiell unsicheren zweiten Vorrichtung 2 vorzunehmen, und auch die Bildung des Hashwerts H3 in der ersten Vorrichtung 1 vorzunehmen. Sämtliche kryptographischen Funktionen würden dann in der ersten Vorrichtung 1 vorgenommen.

Diese Vorgehensweise ist in Fig. 8 dargestellt.

Der Schritt 405 des Ausgebens einer ersten Repräsentation (z.B. einer PDF-Repräsentation) der ersten Informationen von der zweiten Vorrichtung 2 und deren Empfang im Schritt 504 an der ersten Vorrichtung 1 ist hier nicht mehr optional, sondern erforderlich. Es folgen die Schritte 506 der Erfassung der Unterzeichnungsdaten, der optionale Schritt 512 der Berechnung von Kombinationsinformationen und der neue Schritt 515, der die bisherigen Schritte 513, 409 und 410 ersetzt.

Insbesondere wird im Schritt 515 eine Repräsentation (z.B. eine PDF-Repräsentation) einer Kombination aus zumindest (oder lediglich) den ersten Informationen und zumindest einem Teil (oder allem) von zweiten Informationen erzeugt. Die obigen Ausführungen zu Schritt 410 hinsichtlich der Erzeugung dieser Repräsentation sind auch vorliegend einschlägig, insbesondere kann also im Falle einer PDF-Repräsentation zumindest der Teil der zweiten Informationen als inkrementelles PDF-Update an ein ursprüngliches PDF-Dokument, das die ersten Informationen repräsentiert, angehängt werden, um die Repräsentation der Kombination zu erhalten. Die zweiten Informationen umfassen zumindest eine (insbesondere verschlüsselte, beispielsweise gemäß einem hybriden Verschlüsselungsverfahren wie bereits erläutert) Repräsentation der Unterzeichnungsdaten, und optional Informationen, die die Kombinationsinformationen aus Schritt 512 umfassen oder daraus abgeleitet sind (z.B. eine Signatur über die Kombinationsinformationen), und/oder Informationen zu einem ersten öffentlichen Schlüssel.

Zur Erzeugung dieser Repräsentation gemäß Schritt 515 kann es erforderlich sein, dass die erste Vorrichtung 1 über entsprechende Softwarebibliotheken verfügt, beispielsweise über eine PDF-Bibliothek zum Erzeugen einer PDF-Repräsentation, was bei dem Beispiel der Fig. 4 nicht erforderlich war.

Im neuen Schritt 516, der den bisherigen Schritt 412 ersetzt, wird dann ein Hashwert H3 über die in Schritt 515 erzeugte Repräsentation gebildet und somit die ersten Informationen und die zweiten Informationen aneinander gebunden.

Für diesen Hashwert H3 wird im bekannten Schritt 521 dann basierend auf dem ersten privaten Schlüssel eine Signatur bestimmt.

Im neuen Schritt 523, der insbesondere den bisherigen Schritt 416 ersetzt, wird dann eine Repräsentation (z.B. eine PDF-Repräsentation) einer Kombination aus zumindest den ersten Informationen, zumindest dem Teil der zweiten Informationen und der Signatur des Hashwerts H3 an die zweite Vorrichtung 2 ausgegeben. Insbesondere wird diese Repräsentation der Kombination auch vor der Ausgabe an die zweite Vorrichtung 2 in der ersten Vorrichtung 1 erzeugt. Hier gelten analog die Ausführungen zur Erzeugung der Repräsentation der Kombination gemäß Schritt 416, insbesondere kann also die Repräsentation der Kombination eine PDF-Repräsentation sein, die ein ursprüngliches PDF-Dokument, das die ersten Informationen repräsentiert, und ein inkrementelles PDF-Update, das zumindest den Teil der zweiten Informationen repräsentiert und in einem Platzhalterfeld ferner die Signatur des Hashwerts H3 aufnimmt, umfassen. Auch hier ist für die Erzeugung der Repräsentation der Kombination u.U. eine Software-Bibliothek in der ersten Vorrichtung 1 erforderlich, beispielsweise von einer PDF-Bibliothek, falls die Repräsentation der Kombination eine PDF-Repräsentation ist.

Die Repräsentation der Kombination wird dann im Schritt 417 an der zweiten Vorrichtung 2 empfangen und gemäß Schritt 418 dann wie in den bisherigen Beispielen gespeichert und/oder ausgegeben.

Im Beispiel der Fig. 8 wird also gemäß dem vierten Aspekt von der zweiten Vorrichtung 2 im Schritt 405 lediglich eine Repräsentation der ersten Informationen, also beispielsweise ein PDF-Dokument mit den zu unterzeichnenden Informationen, an die erste Vorrichtung 1 ausgegeben und im Schritt 417 eine vollständige Repräsentation einer Kombination der ersten Informationen, zumindest eines Teils der zweiten Informationen (mit einer darin enthaltenen Repräsentation der Unterzeichnungsdaten) und einer Signatur eines entsprechenden Hashwerts über eine Repräsentation der vorgenannten Informationen, also beispielsweise ein PDF-Dokument mit den zu unterzeichnenden Informationen, den Unterzeichnungsdaten und einer Signatur über den Hashwert darüber, erhalten. Optional kann das erhaltene PDF-Dokument auch noch eine Signatur über Kombinationsinformationen und/oder Informationen zu einem ersten öffentlichen Schlüssel zur Prüfung der Signatur des Hashwerts H3 umfassen. Eine Manipulation der Unterzeichnung ist hier ausgehend von der zweiten Vorrichtung 2 nur schwerlich möglich, da alle relevanten Operationen in der ersten Vorrichtung 1 erfolgen.

Wie erläutert stellt das Beispiel der Fig. 8 gemäß dem vierten Aspekt ein sehr sicheres Unterzeichnungsverfahren dar. Allerdings kann zur Erzeugung der Repräsentationen (z.B. von PDF-Repräsentationen) von Informationen in der ersten Vorrichtung 1 eine jeweilige Software-Bibliothek, wie beispielsweise eine PDF-Bibliothek, erforderlich sein, was beispielsweise die Fähigkeiten des Betriebssystems der ersten Vorrichtung 1 übersteigen kann.

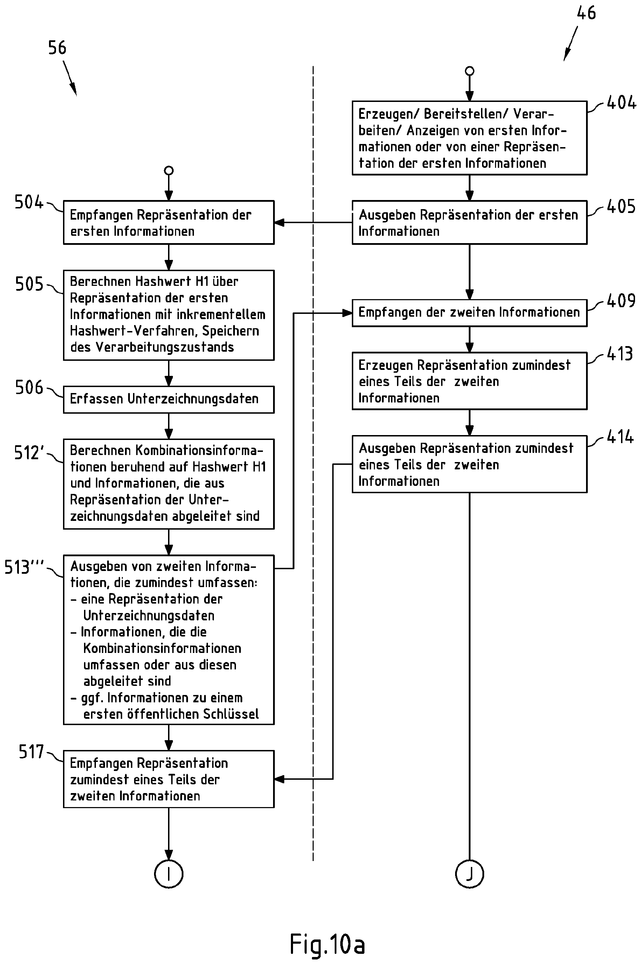

Erfindungsgemäß, wie in den Fig. 9a/9b und 10a/10b präsentiert, soll daher ein ähnlich sicheres Verfahren vorgestellt werden, dass allerdings keine speziellen Software-Bibliotheken, insbesondere keine PDF-Bibliothek, in der ersten Vorrichtung 1 erfordert. Die Fig. 9a/9b beschreibt zunächst das grundsätzliche Prinzip, während die Fig. 10a/10b eine erfindungsgemäße Ausführungsform beschreibt, bei der die Komplexität der Verarbeitung und der Speicherbedarf durch Verwendung eines inkrementellen Hashwert-Verfahrens reduziert werden kann.

Das erste Verfahren 55 und das zweite Verfahren 45 der Fig. 9a/9b bauen wiederum auf den Verfahren 40 und 50 der Fig. 4 auf. Insbesondere erfolgen die Schritte 504-513 des Verfahrens 55 an der ersten Vorrichtung 1 und die Schritte 404-409 des Verfahrens 45 an der zweiten Vorrichtung analog zur Fig. 4, so dass bezüglich auf die obige Beschreibung dieser Schritte verwiesen wird.

Das zweite Verfahren 45 weist erfindungsgemäß insbesondere folgende Schritte auf:
- Schritt 413: Erzeugen einer Repräsentation zumindest eines Teils der zweiten Informationen; und
- Schritt 414: Ausgeben der Repräsentation zumindest eines Teils der zweiten Informationen an die erste Vorrichtung

Das erste Verfahren 55 weist erfindungsgemäß insbesondere folgende Schritte auf:
- Schritt 517: Empfangen einer Repräsentation zumindest eines Teils der zweiten Informationen von der zweiten Vorrichtung;
- Schritt 518: Feststellen, ob zumindest ein Teil der Repräsentation zumindest eines Teils der zweiten Informationen zu zumindest einem Teil der zweiten Informationen korrespondiert, wobei falls festgestellt wurde, dass zumindest ein Teil der Repräsentation zumindest eines Teils der zweiten Informationen zu zumindest einem Teil der zweiten Informationen korrespondiert, folgende Schritte ausgeführt werden:
- Schritt 520: Berechnen eines Hashwerts über eine Kombination, insbesondere in Form einer Aneinanderreihung, aus zumindest einer Repräsentation der ersten Informationen und der Repräsentation zumindest eines Teils der zweiten Informationen,
- Schritt 521: Berechnen einer Signatur des Hashwerts über die Kombination aus zumindest der Repräsentation der ersten Informationen und der Repräsentation zumindest eines Teils der zweiten Informationen, insbesondere mit einem privaten Schlüssel der ersten Vorrichtung; und
- Schritt 522: Ausgeben der Signatur des Hashwerts an die zweite Vorrichtung.

Im Schritt 413 wird also eine Repräsentation zumindest eines Teils der zweiten Informationen, die im Schritt 409 empfangen wurden, erzeugt. Dabei kann es sich um eine Repräsentation handeln, die neben den zweiten Informationen (oder einem Teil davon) noch weitere Informationen repräsentiert, oder die lediglich die zweiten Informationen (oder einen Teil davon) repräsentiert. Die in Schritt 413 erzeugte Repräsentation kann beispielsweise nicht die ersten Informationen repräsentieren. Insbesondere stellt die im Schritt 413 erzeugte Repräsentation zumindest eines Teils der zweiten Informationen keine Repräsentation einer Kombination aus zumindest den ersten Informationen und zumindest einem Teil der zweiten Informationen dar, wie sie in Schritt 410 der Fig. 4 erzeugt wird. Die in Schritt 413 erzeugte Repräsentation zumindest eines Teils der zweiten Informationen kann beispielsweise lediglich Informationen umfassen oder auf Informationen beruhen, die im Schritt 409 empfangen wurden.

Die Formulierung "zumindest eines Teils der zweiten Informationen" bezeichnet im Folgenden genau den Teil der zweiten Informationen (oder die gesamten zweiten Informationen), für die im Schritt 413 die Repräsentation erzeugt wurde.

Beispielsweise stellt die in Schritt 413 erzeugte Repräsentation zumindest eines Teils der zweiten Informationen eine Repräsentation dar, die an eine Repräsentation der ersten Informationen (gemäß dem Schritt 404 und/oder dem optionalen Schritt 405) angehängt werden kann, um eine Repräsentation einer Kombination der ersten Informationen und zumindest des Teils der zweiten Informationen zu erhalten. Wenn es sich bei der Repräsentation im Schritt 404 und dem optionalen Schritt 405 um eine PDF-Repräsentation, insbesondere ein PDF-Dokument, der ersten Informationen handelt, stellt die in Schritt 413 erzeugte Repräsentation zumindest eines Teils der zweiten Informationen beispielsweise ein inkrementelles PDF-Update dar, das die zweiten Informationen (oder zumindest den Teil davon) repräsentiert. Durch unmittelbares Anhängen des inkrementellen PDF-Updates an das PDF-Dokument mit den ersten Informationen wird also ein neues PDF-Dokument erhalten, das die ersten Informationen und die zweiten Informationen (oder zumindest den Teil davon) enthält.

Im Schritt 413 wird also die Repräsentation zumindest eines Teils der zweiten Informationen dergestalt erzeugt, dass eine Repräsentation (z.B. in Form eines PDF-Dokuments) einer Kombination aus zumindest den ersten Informationen und zumindest dem Teil der zweiten Informationen einer Kombination, insbesondere in Form einer Aneinanderreihung, aus zumindest der Repräsentation (z.B. in Form eines PDF-Dokuments) der ersten Informationen und der Repräsentation (z.B. in Form eines inkrementellen PDF-Updates) zumindest eines Teils der zweiten Informationen entspricht.

Dadurch ist es möglich, dass die Bildung des Hashwerts H3 an der ersten Vorrichtung 1 vorgenommen werden kann. Beispielsweise erhält die erste Vorrichtung 1 eine Repräsentation der ersten Information (z.B. ein PDF-Dokument), siehe Schritt 405, und dann eine Repräsentation zumindest eines Teils der zweiten Informationen (z.B. ein inkrementelles PDF-Update), siehe Schritt 517, und berechnet dann im Schritt 520 den Hashwert H3 über die Kombination dieser beiden Repräsentationen (die einer Repräsentation einer Kombination der ersten Informationen und zumindest des Teils der zweiten Informationen, also beispielsweise einem neuen PDF-Dokument, entspricht). Eine spezielle Software-Bibliothek zur Erzeugung der beiden Repräsentationen ist dazu in der ersten Vorrichtung 1 nicht erforderlich und lediglich in der zweiten Vorrichtung 2 vonnöten. Die erste Vorrichtung gibt dann, nach Erzeugung der Signatur des Hashwerts H3 mit dem ersten privaten Schlüssel, im Schritt 522 die Signatur an die zweite Vorrichtung 2 aus. Dort wird diese Signatur im Schritt 416 zur Erzeugung der Repräsentation der Kombination aus zumindest (oder lediglich) den ersten Informationen, zumindest dem Teil der zweiten Informationen und der Signatur des Hashwerts H3 genutzt, also wie im Schritt 416 der Fig. 4. Insbesondere kann die Signatur, wenn es sich bei den Repräsentationen um PDF-Repräsentationen handelt, wieder in ein Platzhalterfeld des inkrementellen PDF-Updates eingesetzt werden.

Im Schritt 518 wird geprüft, ob zumindest ein Teil der Repräsentation zumindest eines Teils der zweiten Informationen, also zumindest ein Teil der in Schritt 517 empfangenen Repräsentation, zu zumindest einem Teil der zweiten Informationen korrespondiert (nachfolgend als der "Prüfteil" bezeichnet. Der Prüfteil kann dabei die gesamten im Schritt 513 von der ersten Vorrichtung 1 ausgegebenen zweiten Informationen umfassen, oder nur einen Teil davon, beispielsweise den bei der Erzeugung der Repräsentation in Schritt 413 betroffenen Teil der zweiten Informationen oder einen Teil von diesem Teil.

Eine Korrespondenz kann beispielsweise dann vorliegen, wenn der Prüfteil in der Repräsentation zumindest eines Teils der zweiten Informationen, wie sie in Schritt 517 empfangen wird, identisch enthalten ist. Eine Korrespondenz kann beispielsweise auch vorliegen, wenn der Prüfteil in der im Schritt 517 empfangenen Repräsentation in einem anderen Format, aber inhaltlich übereinstimmend enthalten ist.

Die Korrespondenz kann beispielsweise dadurch festgestellt werden, dass die im Schritt 517 empfangene Repräsentation an der ersten Vorrichtung 1 geparst und nach Übereinstimmungen mit dem Prüfteil gesucht wird. Das Parsing kann beispielsweise durch eine in dem Prüfteil z.B. an dessen Anfang oder Ende) oder vor oder nach dem Prüfteil in der im Schritt 517 empfangenen Präsentation enthaltenen Kennung (z.B. einer vordefinierten Bit- oder Zeichenkette)

Anhand des Prüfteils kann insbesondere festgestellt werden, ob (etwa besonders sicherheitsrelevante) Bestandteile der im Schritt 513 ausgegebenen zweiten Informationen bei der Erzeugung der Repräsentation zumindest eines Teils der zweiten Informationen im Schritt 413 oder bei der Übertragung dieser Repräsentation an die erste Vorrichtung 1 (Schritte 414/ 517) geändert wurden. Beispielsweise kann der Prüfteil Informationen umfassen, die Kombinationsinformationen umfassen oder daraus abgeleitet sind (z.B. als Signatur darüber), die im Schritt 512 berechnet wurden, im Schritt 513 als Teil der zweiten Informationen an die zweite Vorrichtung 2 ausgegeben wurden und dort zu demjenigen Teil der zweiten Informationen gehören, für die im Schritt 413 eine Repräsentation erzeugt wird.

Im Schritt 518 wird dann geprüft, ob in der in Schritt 517 empfangenen Repräsentation zumindest eines Teils der zweiten Informationen ein zu dem Prüfteil, wie er in der ersten Vorrichtung berechnet wurde, korrespondierender Teil vorhanden ist.

Wenn dies der Fall ist, werden die Schritte 520 (Berechnung Hashwert H3), 521 (Berechnung Signatur Hashwert H3 mit erstem privaten Schlüssel) und 522 (Ausgabe Signatur Hashwert H3) ausgeführt. Anderenfalls wird im Schritt 519 eine Fehlermeldung ausgegeben und das Verfahren 55 abgebrochen.

Die Hashwertberechnung im Schritt 520 kann beispielsweise dadurch erfolgen, dass eine in der ersten Vorrichtung 1 vorhandene Repräsentation der ersten Informationen (die beispielsweise im optionalen Schritt 504 empfangen wurde) mit der im Schritt 517 empfangenen Repräsentation zumindest eines Teils der zweiten Informationen verbunden wird (beispielsweise durch Anfügen der letztgenannten Repräsentation an die davor genannte Repräsentation) und über die verbundenen Repräsentationen dann der Hashwert H3 berechnet wird.

Bei der in der Fig. 9a/9b vorgestellten Vorgehensweise kann also vorteilhaft die Bildung des Hashwerts H3 mit dem gleichen Ergebnis erfolgen wie bei der Vorgehensweise nach Fig. 4 oder Fig. 8, allerdings mit dem Vorteil gegenüber der Vorgehensweise nach Fig. 4, dass der Hashwert im gegenüber der zweiten Vorrichtung 2 sichereren ersten Vorrichtung 1 erfolgen kann und mit dem Vorteil gegenüber der Vorgehensweise nach Fig. 8, dass in der ersten Vorrichtung 1 keine Software-Bibliotheken (beispielsweise eine PDF-Bibliothek) erforderlich ist.

Eine Reduzierung des Rechenaufwands bzw. des Speicherbedarfs in der ersten Vorrichtung kann erzielt werden, wenn die Berechnung des Hashwerts H3 nach einem inkrementellen Hashwert-Verfahren vorgenommen wird. Dies wird nachfolgend anhand der Fig. 10a/10b vorgestellt, die von den Fig. 9a/9b ausgehen.

Die Fig. 10a/10b unterscheiden sich von den Fig. 9a/9b dadurch, dass die Schritte 405/504 nicht mehr optional sind, dass der Schritt 505 hinzutritt und dass der Schritt 520 zum Schritt 520' modifiziert wird.

Das erste Verfahren 56 in Fig. 10a/10b ist demnach dadurch charakterisiert, dass im Schritt 520' der Hashwert über die Kombination aus zumindest der Repräsentation der ersten Informationen und der Repräsentation zumindest eines Teils der zweiten Informationen gemäß einem inkrementellen Hashwert-Verfahren berechnet wird.

Unter einem inkrementellen Hashwert-Verfahren wird ein Hashwert-Verfahren verstanden, bei dem die Daten, über die der Hashwert berechnet wird, sequentiell in zumindest zwei Blöcken verarbeitet werden, so dass diese Daten nicht gleichzeitig vollständig an der ersten Vorrichtung gespeichert werden müssen. Wenn die Daten, über die der Hashwert berechnet werden soll, aus einem ersten Block von Daten und einem sich daran anschließenden zweiten Block von Daten bestehen, können bei dem inkrementellen Hashwert-Verfahren beispielsweise erst die Daten des ersten Blocks verarbeitet werden und dann ein Verarbeitungszustand (beispielsweise umfassend Schieberegisterzustände) des inkrementellen Hashwert-Verfahrens gespeichert wird. Aufbauend auf dem gespeicherten Verarbeitungszustand und den Daten des zweiten Blocks kann dann der Hashwert über den gesamten aus dem ersten Block und dem zweiten Block bestehenden Block berechnet werden. Dies ist vorliegend vorteilhaft anwendbar, da der Hashwert H3 über zwei aneinandergereihte Blöcke von Daten, nämlich einen ersten Block, der durch die Repräsentation der ersten Informationen gebildet wird (empfangen im Schritt 504), und einen zweiten Block, der durch die Repräsentation zumindest eines Teils der zweiten Informationen (empfangen im Schritt 517) gebildet wird, zu bilden ist.

Vorteilhaft ist hier, dass nicht gleichzeitig der erste Datenblock und der zweite Datenblock in der ersten Vorrichtung gespeichert werden müssen, sondern der erste Datenblock nach seiner Abarbeitung im inkrementellen Hashwert-Verfahren verworfen werden kann.

Es sei angemerkt, dass das inkrementelle Hashwert-Verfahren auch mit kleineren Blockgrößen arbeiten kann, also beispielsweise die Daten, über die ein Hashwert zu bilden ist, in N>2 Blöcken verarbeitet werden können. Dann ist es noch nicht einmal erforderlich, die gesamte Repräsentation der ersten Informationen oder die gesamte Repräsentation zumindest eines Teils der zweiten Informationen gleichzeitig in der ersten Vorrichtung zu speichern, sondern nur jeweils Bruchteile davon, wodurch der Speicherplatzbedarf in der ersten Vorrichtung und damit die Kosten reduziert werden können.

Als Beispiels eines derartigen inkrementellen Hashwert-Verfahrens kann die Berechnung des Hashwerts SHA256 aus der OpenSSL-Bibliothek (https://www.openssl.org/docs/crypto/sha.html) herangezogen werden. Dort wird zunächst mit dem Funktionsaufruf SHA256_Init() eine SHA256_CTX Struktur initialisiert (die den Verarbeitungszustand des inkrementellen Hashwert-Verfahrens widerspeigelt) und das inkrementelle Hashwert-Verfahren gestartet. Durch wiederholtes Aufrufen der Funktion SHA256_Update() werden kontinuierlich Teilblöcke eines Blocks, über den der Hashwert SHA256 zu bilden ist, an das inkrementelle Hashwert-Verfahren übergeben, jeweils der aktuelle Verarbeitungszustand in der SHA256_CTX Struktur gespeichert und bei erneutem Aufruf von SHA256_Update() weiterverwendet. Die Funktion SHA256_Final() führt dann zur Ausgabe des berechneten Hashwerts und löscht die SHA256_CTX Struktur.

Im Ausführungsbeispiel der Fig. 9a/9b ist es also beispielsweise möglich, das inkrementelle Hashwert-Verfahren dergestalt anzuwenden, dass beispielsweise beim Empfang der Repräsentation der ersten Informationen im Schritt 504 diese Repräsentation der inkrementellen Hashwert-Berechnung zugeführt wird. Dies hat den Vorteil, dass beispielsweise die Repräsentation der ersten Informationen nicht als Ganzes, sondern lediglich sequentiell Teilblöcke davon empfangen werden müssen und nach Zuführung zum inkrementellen Hashwert-Verfahren direkt wieder verworfen werden können. Im Schritt 517 könnte die Berechnung des Hashwerts H3 dann fortgesetzt werden basierend auf sequentiell empfangenen Teilblöcken der Repräsentation zumindest eines Teils der zweiten Informationen. Nachdem alle Teilblöcke der Repräsentation der ersten Informationen und der Repräsentation zumindest eines Teils der zweiten Informationen dann dem inkrementellen Hashwert-Verfahren durchgeführt wurden, kann der finale Hashwert H3 durch das inkrementelle Hashwert-Verfahren ausgegeben werden. Alternativ wäre auch denkbar, dass die Repräsentation der ersten Informationen nicht von der zweiten Vorrichtung 2 an die erste Vorrichtung 1 übertragen wird und die inkrementelle Hashwert-Berechnung auf beide Vorrichtungen aufgeteilt wird: der die Repräsentation der ersten Informationen betreffende Teil der Berechnung wird in der zweiten Vorrichtung ausgeführt, der diesbezügliche Verarbeitungszustand des inkrementellen Hashwert-Verfahrens an die erste Vorrichtung 1 übertragen und dort aufbauend auf diesem Verarbeitungszustand und der Repräsentation zumindest des Teils der zweiten Informationen der restliche Teil der Berechnung des Hashwerts H3 ausgeführt. Vorteilhaft müsste dann die Repräsentation der ersten Informationen nicht an die erste Vorrichtung übertragen werden, allerdings sind dann wiederum an der unsichereren zweiten Vorrichtung 2 Manipulationen an der Repräsentation der ersten Informationen und dem diesbezüglichen Teil der Hashwertberechnung denkbar.

Im Ausführungsbeispiel der Fig. 10a/10b wird davon ausgegangen, dass nicht lediglich der Hashwert H3 berechnet werden muss, sondern auch ein Hashwert H1 über die Repräsentation der ersten Informationen, die im Schritt 504 empfangen wurde. Dieser Hashwert H1 wird bei der Erzeugung der Kombinationsinformationen im Schritt 512 benötigt, beispielsweise zusammen mit einem Hashwert H2 über eine Repräsentation der Unterzeichnungsdaten. Hinsichtlich der Kombinationsinformationen wird auf die Beschreibung des Schritts 512 der Fig. 4 verwiesen.

Das Verfahren 56 der Fig. 10a/10b ist dann dadurch charakterisiert, dass die (im Schritt 513 ausgegebenen) zweiten Informationen ferner Informationen umfassen, die zumindest auf einem Hashwert H1 über die Repräsentation der ersten Informationen beruhen, wobei der Hashwert H1 über die Repräsentation der ersten Informationen ebenfalls gemäß dem inkrementellen Hashwert-Verfahren berechnet wird, und wobei der Hashwert H3 über die Kombination aus zumindest der Repräsentation der ersten Informationen und der Repräsentation zumindest eines Teils der zweiten Informationen zumindest teilweise auf Rechenschritten beruht, die bei der Berechnung des Hashwerts H1 über die Repräsentation der ersten Informationen bereits geleistet wurden und daher nicht erneut ausgeführt werden. Dadurch wird Rechenleistung eingespart. Wir zuvor beschrieben kann bei Verwendung von kleinen Blockgrößen im inkrementellen Hashwert-Verfahren zudem der Speicherbedarf in der ersten Vorrichtung reduziert werden.

Das inkrementelle Hashwert-Verfahren umfasst dann beispielsweise folgende Schritte:
- Verarbeiten der Repräsentation der ersten Informationen (Schritt 505);
- Speichern des Verarbeitungszustands (Schritt 505);
- Ausgeben eines ersten finalisierten Hashwerts H1 unter der Annahme, dass auf die Repräsentation der ersten Informationen keine weiteren Informationen folgen, wobei der erste finalisierte Hashwert H1 dem Hashwert über die Repräsentation der ersten Informationen entspricht (Schritt 505);
- Verarbeiten, aufbauend auf dem gespeicherten Verarbeitungszustand, der Repräsentation zumindest eines Teils der zweiten Informationen (Schritt 520'); und
- Ausgeben eines zweiten finalisierten Hashwerts H3 unter der Annahme, dass auf die Repräsentation zumindest des Teils der zweiten Informationen keine weiteren Informationen folgen, wobei der zweite finalisierte Hashwert H3 dem Hashwert über die Kombination aus zumindest der Repräsentation der ersten Informationen und der Repräsentation zumindest eines Teils der zweiten Informationen entspricht (Schritt 520').

Die in dieser Spezifikation beschriebenen Beispiele und Ausführungsbeispiele der vorliegenden Erfindung und die diesbezüglich jeweils angeführten optionalen Merkmale und Eigenschaften sollen auch in allen Kombinationen miteinander offenbart verstanden werden. Es ist insbesondere hervorzuheben, dass einer oder mehrere des ersten, zweiten und dritten Aspekts ohne weiteres mit dem vierten oder fünften Aspekt kombinierbar sind. Die Beschreibung eines von einer Ausführungsform umfassten Merkmals soll - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren (55, 56), ausgeführt an und/oder von einer ersten Vorrichtung (1), das Verfahren (55, 56) umfassend:
- Erfassen (506) von für eine Person charakteristischen Unterzeichnungsdaten, wenn eine Person an der ersten Vorrichtung (1) erste Informationen unterzeichnet;
- Ausgeben (513) von zweiten Informationen, die zumindest eine Repräsentation der Unterzeichnungsdaten umfassen, an eine zweite Vorrichtung (2);
- Empfangen (517) einer Repräsentation zumindest eines Teils der zweiten Informationen von der zweiten Vorrichtung (2);
- Feststellen (518), ob zumindest ein Teil der Repräsentation zumindest eines Teils der zweiten Informationen zu zumindest einem Teil der zweiten Informationen korrespondiert,
wobei falls festgestellt wurde, dass zumindest ein Teil der Repräsentation zumindest eines Teils der zweiten Informationen zu zumindest einem Teil der zweiten Informationen korrespondiert, zumindest folgende Schritte ausgeführt werden:
- Berechnen (520) eines Hashwerts über eine Kombination aus zumindest einer Repräsentation der ersten Informationen und der Repräsentation zumindest eines Teils der zweiten Informationen;
- Berechnen (521) einer Signatur des Hashwerts über die Kombination aus zumindest der Repräsentation der ersten Informationen und der Repräsentation zumindest eines Teils der zweiten Informationen, insbesondere mit einem privaten Schlüssel der ersten Vorrichtung; und
- Ausgeben (522) der Signatur des Hashwerts an die zweite Vorrichtung (2).

2. Verfahren (55, 56) nach Anspruch 1, wobei zumindest die Repräsentation zumindest eines Teils der zweiten Informationen dergestalt erzeugt wurde, dass eine Repräsentation einer Kombination aus zumindest den ersten Informationen und zumindest dem Teil der zweiten Informationen einer Kombination, insbesondere in Form einer Aneinanderreihung, aus zumindest der Repräsentation der ersten Informationen und der Repräsentation zumindest eines Teils der zweiten Informationen entspricht.

3. Verfahren (56) nach einem der Ansprüche 1-2, wobei der Hashwert über die Kombination aus zumindest der Repräsentation der ersten Informationen und der Repräsentation zumindest eines Teils der zweiten Informationen gemäß einem inkrementellen Hashwert-Verfahren berechnet wird.

4. Verfahren (56) nach Anspruch 3, wobei bei dem inkrementellen Hashwert-Verfahren die Daten, über die der Hashwert berechnet wird, sequentiell in zumindest zwei Blöcken verarbeitet werden, so dass diese Daten nicht gleichzeitig vollständig an der ersten Vorrichtung gespeichert werden müssen.

5. Verfahren (56) nach einem der Ansprüche 3-4, wobei die zweiten Informationen ferner Informationen umfassen, die zumindest auf einem Hashwert über die Repräsentation der ersten Informationen beruhen, wobei der Hashwert über die Repräsentation der ersten Informationen ebenfalls gemäß dem inkrementellen Hashwert-Verfahren berechnet wird, und wobei der Hashwert über die Kombination aus zumindest der Repräsentation der ersten Informationen und der Repräsentation zumindest eines Teils der zweiten Informationen zumindest teilweise auf Rechenschritten beruht, die bei der Berechnung des Hashwerts über die Repräsentation der ersten Informationen bereits geleistet wurden und daher nicht erneut ausgeführt werden.

6. Verfahren (56) nach Anspruch 5, wobei das inkrementelle Hashwert-Verfahren folgende Schritte umfasst:
- Verarbeiten (505) der Repräsentation der ersten Informationen;
- Speichern (505) des Verarbeitungszustands;
- Ausgeben (505) eines ersten finalisierten Hashwerts unter der Annahme, dass auf die Repräsentation der ersten Informationen keine weiteren Informationen folgen, wobei der erste finalisierte Hashwert dem Hashwert über die Repräsentation der ersten Informationen entspricht;
- Verarbeiten (520'), aufbauend auf dem gespeicherten Verarbeitungszustand, der Repräsentation zumindest eines Teils der zweiten Informationen; und
- Ausgeben (520') eines zweiten finalisierten Hashwerts unter der Annahme, dass auf die Repräsentation zumindest des Teils der zweiten Informationen keine weiteren Informationen folgen, wobei der zweite finalisierte Hashwert dem Hashwert über die Kombination aus zumindest der Repräsentation der ersten Informationen und der Repräsentation zumindest eines Teils der zweiten Informationen entspricht.

7. Verfahren (55, 56) nach einem der Ansprüche 1-6, ferner umfassend:
- Verschlüsseln (510, 510') der Unterzeichnungsdaten mit einem Sitzungsschlüssel, um verschlüsselte Unterzeichnungsdaten zu erhalten; und
- Verschlüsseln (511, 511') des Sitzungsschlüssels, insbesondere mit einem öffentlichen Schlüssel der ersten Vorrichtung.

8. Verfahren (55, 56) nach Anspruch 7, ferner umfassend:
- Empfangen (502) des insbesondere mit einem öffentlichen Schlüssel verschlüsselten Sitzungsschlüssels von der zweiten Vorrichtung (2) und Entschlüsseln (503) des verschlüsselten Sitzungsschlüssels, insbesondere mit einem privaten Schlüssel der ersten Vorrichtung, um den Sitzungsschlüssel zu erhalten; oder
- Erzeugen (501) des Sitzungsschlüssels.

9. Verfahren (55, 56) nach einem der Ansprüche 1-8, wobei die zweiten Informationen ferner umfassen:
- Informationen, die Kombinationsinformationen umfassen oder aus diesen abgeleitet sind, insbesondere durch Bildung einer Signatur eines Hashwerts über die Kombinationsinformationen, insbesondere unter Verwendung eines privaten Schlüssels der ersten Vorrichtung, wobei die Kombinationsinformationen eine Kombination von zumindest folgendem umfassen: Informationen, die eine Repräsentation der ersten Informationen umfassen oder aus dieser abgeleitet sind, insbesondere ein Hashwert über die Repräsentation der ersten Informationen, und Informationen, die eine Repräsentation der Unterzeichnungsdaten umfassen oder aus dieser abgeleitet sind, insbesondere ein Hashwert über die Repräsentation der Unterzeichnungsdaten.

10. Verfahren (55, 56) nach einem der Ansprüche 1-9, soweit auf einen der Ansprüche 7-8 rückbezogen, wobei die Repräsentation der Unterzeichnungsdaten die verschlüsselten Unterzeichnungsdaten umfasst und die zweiten Informationen ferner den verschlüsselten Sitzungsschlüssel umfassen.

11. Verfahren (55, 56) nach einem der Ansprüche 1-10, ferner umfassend:
- Reduzieren (507) des Informationsgehalts der erfassten Unterzeichnungsdaten, um reduzierte Unterzeichnungsdaten zu erhalten, und
- Ausgeben (508) der reduzierten Unterzeichnungsdaten an die zweite Vorrichtung (2).

12. Verfahren (55, 56) nach Anspruch 11, wobei die erfassten Unterzeichnungsdaten erfasste Unterschriftsdaten umfassen, die eine erfasste handschriftliche Unterschrift der Person repräsentieren, und wobei das Reduzieren (507) zumindest eines der folgenden umfasst:
- Weglassen zumindest eines Teils von in den erfassten Unterschriftsdaten enthaltener Zeitinformation, insbesondere von einem oder mehreren in den erfassten Unterschriftsdaten enthaltenen Zeitstempeln;
- Weglassen zumindest eines Teils von in den erfassten Unterschriftsdaten enthaltenen Druckinformationen; und
- Weglassen von einer oder mehreren in den erfassten Unterschriftsdaten enthaltenen Unterschriftskoordinaten.

13. Verfahren (55, 56) nach einem der Ansprüche 11-12, wobei das Reduzieren (507) des Informationsgehalts der erfassten Unterzeichnungsdaten und/oder das Ausgeben (508) der reduzierten Unterzeichnungsdaten zumindest teilweise zeitlich überlappend mit dem Erfassen der Unterzeichnungsdaten erfolgt, insbesondere um das Anzeigen (407) einer Repräsentation der reduzierten Unterzeichnungsdaten an der zweiten Vorrichtung zumindest teilweise zeitlich überlappend mit dem Erfassen (506') der Unterzeichnungsdaten zu ermöglichen.

14. Verfahren (45, 46), ausgeführt an und/oder von einer zweiten Vorrichtung (2), das Verfahren umfassend:
- Erzeugen, Bereitstellen, Verarbeiten und/oder Anzeigen (404) von ersten Informationen und/oder von einer Repräsentation der ersten Informationen, wobei die ersten Informationen durch eine Person an einer ersten Vorrichtung (1), die mit der zweiten Vorrichtung (2) drahtgebunden oder drahtlos verbunden ist, unterzeichnet werden sollen;
- Empfangen (409) von zweiten Informationen, die zumindest eine Repräsentation von an der ersten Vorrichtung bei der Unterzeichnung der ersten Informationen durch die Person erfassten und für die Person charakteristischen Unterzeichnungsdaten umfassen, von der ersten Vorrichtung (1);
- Erzeugen (413) einer Repräsentation zumindest eines Teils der zweiten Informationen im Portable Document Format, im ASCII-Text-Format oder im Format einer Auszeichnungssprache,
wobei die Repräsentation zumindest eines Teils der zweiten Informationen es der ersten Vorrichtung (1) ermöglicht, festzustellen, ob zumindest ein Teil der Repräsentation zumindest eines Teils der zweiten Informationen zu zumindest einem Teil der zweiten Informationen korrespondiert;
- Ausgeben (414) der Repräsentation zumindest eines Teils der zweiten Informationen an die erste Vorrichtung (1);
- Empfangen (415) einer insbesondere mit einem privaten Schlüssel der ersten Vorrichtung berechneten Signatur eines Hashwerts über eine Kombination aus zumindest einer Repräsentation der ersten Informationen und der Repräsentation zumindest eines Teils der zweiten Informationen von der ersten Vorrichtung (1);
- Erzeugen (416) einer Repräsentation einer Kombination aus zumindest den ersten Informationen, zumindest dem Teil der zweiten Informationen und der Signatur des Hashwerts; und
- Speichern und/oder Ausgeben (418) der Repräsentation der Kombination aus zumindest den ersten Informationen, zumindest dem Teil der zweiten Informationen und der Signatur des Hashwerts.

15. Verfahren (45, 46, 55, 56) nach einem der Ansprüche 1-14, wobei die Unterzeichnungsdaten umfassen:
- biometrische Daten der Person, insbesondere Charakteristika einer zur Unterzeichnung der ersten Informationen durch die Person vorgenommenen Aktion der Person und/oder Charakteristika eines zur Unterzeichnung der ersten Information eingesetzten Körperteils der Person, und/oder
- eine elektronische Signatur der Person, die zur Unterzeichnung der ersten Informationen von der Person verwendet wird.

16. Vorrichtung zur Ausführung oder Steuerung des Verfahrens nach einem der Ansprüche 1-13, wobei es sich bei der Vorrichtung dann um die erste Vorrichtung handelt, oder zur Ausführung oder Steuerung des Verfahrens nach Anspruch 14, wobei es sich bei der Vorrichtung dann um die zweite Vorrichtung handelt.

17. Programm umfassend Programmanweisungen, die einen Prozessor veranlassen, das Verfahren nach einem der Ansprüche 1-15 auszuführen, wenn das Programm auf dem Prozessor ausgeführt wird.

## Claims

1. A method (55, 56) performed at and/or by a first device (1), the method (55, 56) comprising:
- detecting (506) signing data characteristic of a person when a person signs first information at the first device (1);
- outputting (513) second information comprising at least a representation of the signing data to a second device (2);
- receiving (517) a representation of at a least part of the second information from the second device (2);
- determining (518) whether at least part of the representation of at least a part of the second information corresponds to at least part of the second information,
wherein - if it has been determined that at least part of the representation of at least a part of the second information corresponds to at least part of the second information - at least the following steps are performed:
- calculating (520) a hash value over a combination of at least a representation of the first information and the representation of at least a part of the second information;
- calculating (521) a signature of the hash value over the combination of at least the representation of the first information and the representation of at least a part of the second information, in particular with a private key of the first device; and
- issuing (522) the signature of the hash value to the second device (2).

2. The method (55, 56) according to claim 1, wherein at least the representation of at least a part of the second information has been generated in such a way that a representation of a combination of at least the first information and at least the part of the second information corresponds to a combination, in particular in the form of a sequence, of at least the representation of the first information and the representation of at least a part of the second information.

3. The method (56) according to any one of claims 1-2, wherein the hash value over the combination of at least the representation of the first information and the representation of at least a part of the second information is calculated according to an incremental hash value method.

4. The method (56) according to claim 3, wherein, in the incremental hash value method, the data from which the hash value is calculated is processed sequentially in at least two blocks, so that this data does not have to be simultaneously stored entirely in the first device.

5. The method (56) of any one of claims 3-4, wherein the second information further comprises information based at least on a hash value over the representation of the first information, wherein the hash value over the representation of the first information is also calculated according to the incremental hash value method, and wherein the hash value over the combination of at least the representation of the first information and the representation of at least a part of the second information is at least partially based on computational steps already performed in the calculation of the hash value over the representation of the first information and are therefore not performed again.

6. The method (56) according to claim 5, wherein the incremental hash value method comprises the following steps:
- processing (505) the representation of the first information;
- storing (505) the processing state;
- outputting (505) a first finalized hash value on the assumption that no further information follows the representation of the first information, wherein the first finalized hash value corresponds to the hash value over the representation of the first information;
- processing (520'), based on the stored processing state, the representation of at least a part of the second information; and
- outputting (520') a second finalized hash value on the assumption that no further information follows the representation of at least a part of the second information, wherein the second finalized hash value corresponds to the hash value over the combination of at least the representation of the first information and the representation of at least a part of the second information.

7. The method (55, 56) according to any one of claims 1-6, further comprising:
- encrypting (510, 510') the signing data with a session key in order to obtain encrypted signing data; and
- encrypting (511, 511') the session key, in particular with a public key of the first device.

8. The method (55, 56) according to claim 7, further comprising:
- receiving (502) the session key, in particular encrypted with a public key, from the second device (2) and decrypting (503) the encrypted session key, in particular with a private key of the first device, to obtain the session key; or
- generating (501) the session key.

9. The method (55, 56) according to any one of claims 1-8, the second information further comprising:
- information comprising or derived from combination information, in particular by generating a signature of a hash value over the combination information, in particular using a private key of the first device, wherein the combination information comprises a combination of at least the following: information comprising or derived from a representation of the first information, in particular a hash value over the representation of the first information, and information comprising or derived from a representation of the signing data, in particular a hash value over the representation of the signing data.

10. The method (55, 56) according to any one of claims 1-9, insofar as relating to any one of claims 7-8, wherein the representation of the signing data comprises the encrypted signing data and the second information further comprises the encrypted session key.

11. The method (55, 56) according to any one of claims 1-10, further comprising:
- reducing (507) the information content of the recorded signing data to obtain reduced signing data, and
- outputting (508) the reduced signing data to the second device (2).

12. The method (55, 56) according to claim 11, wherein the recorded signing data comprises recorded signature data representing a recorded handwritten signature of the person, and wherein reducing (507) comprises at least one of the following:
- omitting at least a part of the time information contained in the recorded signature data, in particular one or more timestamps contained in the recorded signature data;
- omitting at least a part of the pressure information contained in the recorded signature data; and
- omitting one or more signature coordinates contained in the recorded signature data.

13. The method (55, 56) according to any one of claims 11-12, wherein the reducing (507) of the information content of the recorded signing data and/or the outputting (508) of the reduced signing data occurs at least partially overlapping temporally with the recording of the signing data, in particular to enable displaying (407) a representation of the reduced signing data at the second device at least partially overlapping temporally with the recording (506') of the signing data.

14. A method (45, 46) performed at and/or by a second device (2), the method comprising:
- generating, providing, processing and/or displaying (404) first information and/or a representation of the first information, wherein the first information is to be signed by a person at a first device (1) that is connected to the second device (2) in a wired or wireless fashion;
- receiving (409), from the first device (1), second information comprising at least a representation of signing data that is recorded at the first device when the first information is being signed by the person and that is characteristic of the person;
- generating (413) a representation of at least part of the second information in Portable Document Format, in ASCII text format, or in a mark-up language format,
wherein the representation of at least part of the second information enables the first device (1) to determine whether at least part of the representation of at least a part of the second information corresponds to at least part of the second information;
- outputting (414) the representation of at least a part of the second information to the first device (1);
- receiving (415) a signature, in particular calculated with a private key of the first device, of a hash value over a combination of at least a representation of the first information and the representation of at least a part of the second information, from the first device (1);
- generating (416) a representation of a combination of at least the first information, at least the part of the second information and the signature of the hash value; and
- storing and/or outputting (418) the representation of the combination of at least the first information, at least the part of the second information and the signature of the hash value.

15. The method (45, 46, 55, 56) according to any one of claims 1-14, the signing data comprising:
- biometric data of the person, in particular characteristics of an action taken by the person in order to sign the first information and/or characteristics of a part of a body of the person used to sign the first information, and/or
- an electronic signature of the person used by the person for signing the first information.

16. Device for performing or controlling the method of any of the claims 1-13, wherein the device is then the first device, or for performing or controlling the method of claim 14, wherein the device is then the second device.

17. Program comprising program instructions that cause a processor to perform the method of any of the claims 1-15, when the program is executed on the processor.

## Revendications

1. Procédé (55, 56), exécuté à et/ou par un premier dispositif (1), le procédé (55, 56) comprenant :
- la saisie (506) de données de signature caractéristiques d'une personne lorsqu'une personne signe des premières informations au premier dispositif (1) ;
- la fourniture (513) de secondes informations, qui comprennent au moins une représentation des données de signature, à un second dispositif (2) ;
- la réception (517) d'une représentation d'au moins une partie des secondes informations depuis le second dispositif (2) ;
- le fait de déterminer (518) si au moins une partie de la représentation d'au moins une partie des secondes informations correspond à au moins une partie des secondes informations,
dans lequel dans la mesure où il a été déterminé qu'au moins une partie de la représentation d'au moins une partie des secondes informations correspond à au moins une partie des secondes informations, au moins des étapes suivantes sont exécutées :
- le calcul (520) d'une valeur de hachage sur une combinaison d'au moins une représentation des premières informations et de la représentation d'au moins une partie des secondes informations ;
- le calcul (521) d'une signature de la valeur de hachage sur la combinaison d'au moins la représentation des premières informations et de la représentation d'au moins une partie des secondes informations, en particulier avec une clé privée du premier dispositif ; et
- la fourniture (522) de la signature de la valeur de hachage au second dispositif (2).

2. Procédé (55, 56) selon la revendication 1, dans lequel au moins la représentation d'au moins une partie des secondes informations a été générée d'une manière telle qu'une représentation d'une combinaison d'au moins les premières informations et d'au moins la partie des secondes informations correspond à une combinaison, en particulier sous la forme d'une juxtaposition, d'au moins la représentation des premières informations et de la représentation d'au moins une partie des secondes informations.

3. Procédé (56) selon l'une quelconque des revendications 1 et 2, dans lequel la valeur de hachage sur la combinaison d'au moins la représentation des premières informations et de la représentation d'au moins une partie des secondes informations est calculée selon un procédé incrémentiel de valeur de hachage.

4. Procédé (56) selon la revendication 3, dans lequel, lors du procédé incrémentiel de valeur de hachage, les données, par le biais desquelles la valeur de hachage est calculée, sont traitées séquentiellement dans au moins deux blocs de sorte que ces données ne doivent pas être stockées simultanément en intégralité au premier dispositif.

5. Procédé (56) selon l'une quelconque des revendications 3 et 4, dans lequel les secondes informations comprennent en outre des informations qui reposent sur une valeur de hachage sur la représentation des premières informations, dans lequel la valeur de hachage sur la représentation des premières informations est calculée également selon le procédé incrémentiel de valeur de hachage, et dans lequel la valeur de hachage sur la combinaison d'au moins la représentation des premières informations et de la représentation d'au moins une partie des secondes informations repose au moins en partie sur des étapes de calcul qui, lors du calcul de la valeur de hachage sur la représentation des premières informations ont déjà été effectuées et, par conséquent, ne sont pas exécutées de nouveau.

6. Procédé (56) selon la revendication 5, dans lequel le procédé incrémentiel de valeur de hachage comprend les étapes suivantes :
- le traitement (505) de la représentation des premières informations ;
- le stockage (505) de l'état de traitement ;
- la fourniture (505) d'une première valeur de hachage finalisée avec la supposition qu'aucunes autres informations ne suivent la représentation des premières informations, dans lequel la première valeur de hachage finalisée correspond à la valeur de hachage sur la représentation des premières informations ;
- le traitement (520'), sur la base de l'état de traitement stocké, de la représentation d'au moins une partie des secondes informations ; et
- la fourniture (520') d'une seconde valeur de hachage finalisée avec la supposition qu'aucunes autres informations ne suivent la représentation d'au moins la partie des secondes informations, dans lequel la seconde valeur de hachage finalisée correspond à la valeur de hachage sur la combinaison d'au moins la représentation des premières informations et de la représentation d'au moins une partie des secondes informations.

7. Procédé (55, 56) selon l'une quelconque des revendications 1 à 6, comprenant en outre :
- le chiffrement (510, 510') des données de signature avec une clé de session pour obtenir des données de signature chiffrées ; et
- le chiffrement (511, 511') de la clé de session, en particulier avec une clé publique du premier dispositif.

8. Procédé (55, 56) selon la revendication 7, comprenant en outre :
- la réception (502) de la clé de session, chiffrée en particulier avec une clé publique, depuis le second dispositif (2) et le déchiffrement (503) de la clé de session chiffrée, en particulier avec une clé privée du premier dispositif pour obtenir la clé de session ; ou
- la génération (501) de la clé de session.

9. Procédé (55, 56) selon l'une quelconque des revendications 1 à 8, dans lequel les secondes informations comprennent en outre :
- des informations, qui comprennent des informations de combinaison ou sont déduites de celles-ci, en particulier par formation d'une signature d'une valeur de hachage sur les informations de combinaison, en particulier à l'aide d'une clé privée du premier dispositif, dans lequel les informations de combinaison comprennent une combinaison d'au moins ce qui suit : des informations, qui comprennent une représentation des premières informations ou sont déduites de celles-ci, en particulier une valeur de hachage sur la représentation des premières informations, et des informations qui comprennent une représentation des données de signature ou sont déduites de celles-ci, en particulier une valeur de hachage sur la représentation des données de signature.

10. Procédé (55, 56) selon l'une quelconque des revendications 1 à 9, dans la mesure où il se réfère à une des revendications 7 et 8, dans lequel la représentation des données de signature comprend les données de signature chiffrées et les secondes informations comprennent en outre la clé de session chiffrée.

11. Procédé (55, 56) selon l'une quelconque des revendications 1 à 10, comprenant en outre :
- la réduction (507) du contenu d'informations des données de signature saisies pour obtenir des données de signature réduites, et
- la fourniture (508) des données de signature réduites au second dispositif (2).

12. Procédé (55, 56) selon la revendication 11, dans lequel les données de signature saisies comprennent des données de signature saisies qui représentent une signature manuscrite saisie de la personne, et dans lequel la réduction (507) comprend au moins un de ce qui suit :
- l'abandon d'au moins une partie d'informations temporelles, contenues dans les données de signature saisies, en particulier d'une ou de plusieurs estampilles temporelles contenues dans les données de signature saisies ;
- l'abandon d'au moins une partie d'informations d'impression contenues dans les données de signature saisies ; et
- l'abandon d'une ou de plusieurs coordonnées de signature contenues dans les données de signature saisies.

13. Procédé (55, 56) selon l'une quelconque des revendications 11 et 12, dans lequel la réduction (507) du contenu d'informations des données de signature saisies et/ou la fourniture (508) des données de signature réduites est effectuée au moins en partie temporellement en recouvrement avec la saisie des données de signature, en particulier pour permettre l'affichage (407) d'une représentation des données de signature réduites au second dispositif au moins en partie temporellement en recouvrement avec la saisie (506') des données de signature.

14. Procédé (45, 46), exécuté à et/ou par un second dispositif (2), le procédé comprenant :
- la génération, la préparation, le traitement et/ou l'affichage (404) de premières informations et/ou d'une représentation des premières informations, dans lequel les premières informations doivent être signées par une personne au premier dispositif (1) qui est relié par fil ou sans fil au second dispositif (2) ;
- la réception (409) de secondes informations, qui comprennent au moins une représentation de données de signature saisies au premier dispositif lors de la signature des premières informations par la personne et caractéristiques pour la personne, depuis le premier dispositif (1) ;
- la génération (413) d'une représentation d'au moins une partie des secondes informations dans le format de document portable (PDF), dans le format de texte ASCII ou dans le format d'un langage de balisage,
dans lequel la représentation d'au moins une partie des secondes informations du premier dispositif (1) permet de déterminer si au moins une partie de la représentation d'au moins une partie des secondes informations correspond à au moins une partie des secondes informations ;
- la fourniture (414) de la représentation d'au moins une partie des secondes informations au premier dispositif (1) ;
- la réception (415) d'une signature, calculée en particulier avec une clé privée du premier dispositif, d'une valeur de hachage sur une combinaison d'au moins une représentation des premières informations et de la représentation d'au moins une partie des secondes informations depuis le premier dispositif (1) ;
- la génération (416) d'une représentation d'une combinaison d'au moins les premières informations, d'au moins la partie des secondes informations et de la signature de la valeur de hachage ; et
- le stockage et/ou la fourniture (418) de la représentation de la combinaison d'au moins les premières informations, d'au moins la partie des secondes informations et de la signature de la valeur de hachage.

15. Procédé (45, 46, 55, 56) selon l'une quelconque des revendications 1 à 14, dans lequel les données de signature comprennent :
- des données biométriques de la personne, en particulier des caractéristiques d'une action de la personne réalisée par la personne pour la signature des premières informations et/ou des caractéristiques d'une partie corporelle de la personne mise en oeuvre pour la signature des premières informations, et/ou
- une signature électronique de la personne qui est employée par la personne pour la signature des premières informations.

16. Dispositif pour exécuter ou commander le procédé selon l'une quelconque des revendications 1-13, le dispositif étant alors le premier dispositif, ou pour exécuter ou commander le procédé selon la revendication 14, le dispositif étant alors le second dispositif.

17. Programme comprenant des instructions de programme qui amènent un processeur à exécuter la procédure selon l'une quelconque des revendications 1-15 lorsque le programme est exécuté sur le processeur.
